(19) Europäisches Patentamt
European Patent Office
Office européen des brevets

(11) EP 1 651 698 B1

(12) **EUROPÄISCHE PATENTSCHRIFT**

(45) Veröffentlichungstag und Bekanntmachung des Hinweises auf die Patenterteilung:
**12.09.2012 Patentblatt 2012/37**

(21) Anmeldenummer: **04766376.0**

(22) Anmeldetag: **30.07.2004**

(51) Int Cl.:
***C08G 18/80*** *(2006.01)* ***C08G 18/66*** *(2006.01)*
***C09J 5/02*** *(2006.01)* ***C08G 18/79*** *(2006.01)*

(86) Internationale Anmeldenummer:
**PCT/EP2004/051668**

(87) Internationale Veröffentlichungsnummer:
**WO 2005/012382 (10.02.2005 Gazette 2005/06)**

(54) **ISOCYANATFREIE PRIMERZUSAMMENSETZUNG FÜR GLAS UND GLASKERAMIKEN**

ISOCYANATE-FREE PRIMER COMPOSITION FOR GLASS AND GLASS CERAMICS

COMPOSITION DE PRIMAIRE SANS ISOCYANATE POUR LE VERRE ET LA VITROCERAMIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **31.07.2003 EP 03017308**

(43) Veröffentlichungstag der Anmeldung:
**03.05.2006 Patentblatt 2006/18**

(73) Patentinhaber: **Sika Technology AG**
**6340 Baar (CH)**

(72) Erfinder: **TEYSSEIRE, Raphael**
**CH-3930 Visp (CH)**

(74) Vertreter: **Isler, Jörg et al**
**c/o Sika Technology AG**
**Intellectual Property Department**
**Tüffenwies 16-22**
**Postfach**
**8048 Zürich (CH)**

(56) Entgegenhaltungen:
**EP-A- 1 006 132**
**WO-A-02/059224**
**WO-A-03/054049**
**US-A- 5 109 057**
**US-A- 6 133 395**

EP 1 651 698 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Technisches Gebiet

Die Erfindung betrifft isocyanatfreie Primerzusammensetzungen für Glas und Glaskeramiken, um die Haftung eines Klebstoffes oder Dichtstoffes zu verbessern.

### Stand der Technik

Klebstoffe, Beschichtungen, Dichtstoffe, Bodenbeläge und andere Systeme basieren auf reaktiven Bindemitteln. Die Haftung dieser reaktiven Systeme auf diversen Untergründen ist vielfach mangelhaft. Deshalb werden in der Technik vielfach sogenannte ‚Primer' eingesetzt. Ein Primer bildet eine Haftbrücke zwischen dem Untergrund und dem eingesetzten Binder. Ein Primer ist ebenfalls ein chemisch reaktives System und wird auf den Untergrund appliziert.

Um einen Haftungsbau des Primers mit dem Untergrund zu erhalten, muss der Primer eine gewisse Zeit, der sogenannten 'Ablüftezeit', zur Verfügung stehen, um einen Film zu bilden und zumindest teilweise zu vernetzen, bevor der Klebstoff oder ein anderes reaktives System appliziert werden kann. Die Applikation dieses Systems jedoch ist beschränkt, während der sogenannten 'Offenzeit', in welcher der die Haftung zum Primer noch gewährleistet ist. Beim Überschreiten der Offenzeit ist eine Haftung auf dem Primer nicht mehr gewährleistet. Die Offenzeit wird somit in Versuchen ermittelt, bei denen unterschiedlich lange Zeit zwischen Auftrag des Primers und des Klebstoffs eingehalten werden und die Haftung der Verklebungen nach Aushärten des Klebstoffs ermittelt wird. Modellhaft wird die Haftung zwischen Primer und Klebstoff oder einem anderen reaktiven System durch eine Reaktion zwischen diesen Materialien aufgebaut. Um eine schnelle und kosteneffiziente Verarbeitung zu gewährleisten, muss in einer technischen, industriellen Anwendung die Ablüftezeit möglichst kurz sein. Das heisst, der Haftungsaufbau des Primers mit dem Untergrund muss möglichst schnell erfolgen, so dass eine Applikation eines Klebstoffs oder eines anderen reaktiven Systems möglichst schnell erfolgen kann. Hierbei tritt jedoch das Problem auf, dass der Fertigungsprozess aufgrund von beispielsweise technischer Störungen, Schichtende oder Wochenende unterbrochen wird, so dass zwischen Primerauftrag und Auftrag des Klebstoffs oder anderen reaktiven Systems eine längere Zeit von einigen Stunden bis Tage oder gar Wochen verstreichen kann. Dies ist besonders störend in kontinuierlich ablaufenden industriellen Anwendungen. Weiterhin besteht im Automobilbau der Trend zur Verlagerung der Vorbehandlung weg von der industriellen Fertigungslinie hin ins Werk des Zulieferers, so dass zwischen dem Primerauftrag im Werk des Zulieferers bis zum Auftrag des Klebstoffs im Fertigungswerk eine Offenzeit von bis zu einigen Wochen verstreichen könnte.

Um auch in diesen Fällen eine gute Haftung zu gewährleisten, besteht ein grosses Bedürfnis nach Primern mit langen Offenzeiten.

Glas und Glaskeramiken sind für die Verbindungstechnik, insbesondere im Fahrzeugbau, äusserst wichtige Untergründe. Traditionell werden hierfür Primer auf Basis von Isocyanaten eingesetzt. Einerseits sind Isocyanate immer wieder Thema von strittigen Diskussion bezüglich Toxizität und andererseits sind Isocyanate reaktive Substanzen. Insbesondere reagieren sie mit Luftfeuchtigkeit, so das innert kurzer Zeit nach Applikation eines Isocyanatprimers die Anzahl der freien Isocyanatgruppen sehr stark reduziert wird. Deshalb sind normale Isocyanat-basierende Primer generell nur für kurze Offenzeiten geeignet.

US 4,963,614 beschreibt einen Primer für Glas, welcher ein Silan, ein Reaktionsprodukt von einem Silan und einem Polyisocyanat, einen Filmbildner sowie Russ enthält. Das hier offenbarte Silan-Polyisocyanat-Reaktionsprodukt verfügt jedoch nicht über eine Isocyanat-reaktive Gruppe, was auf schlechtere Haftungseigenschaften mit einem darauf applizierten Polyurethanklebstoff, insbesondere nach Kataplasmalagerung, schliessen lässt. Über die Offenzeit dieses Primers sind keine Angaben gemacht.

US 5,109,057 beschreibt einen Primer, der aus einem Isocyanat-gruppen tragenden Polyurethanprepolymer und einem Silan, welches NCOreaktive funktionellen Gruppen trägt, hergestellt wird. Dieser Primer soll sich durch eine verbesserte UV-Beständigkeit auszeichnen. Über die Offenzeit dieses Primers sind keine Angaben gemacht.

WO 02/059224 A1 beschreibt einen zweikomponentigen Primer, der eine Härterkomponente mit einem Additionsprodukt aus einem Alkoxysilan und einem Polyisocyanates mit einer mittleren NCO-Funktionalität von 2.5 bis 5.0 und mit einem Isocyanatgehalt von 8 bis 27 Gew.-% und einem gegenüber Isocyanatgruppen reaktiven Lackharz als zweite Komponente umfasst. Als Alkoxysilan sind jedoch keine primäre Aminosilane offenbart.

Mit dem Stand der Technik ist es bisher nicht möglich, einen isocyanatfreien Primer zu erhalten, welcher eine gute Haftung auf Glas und Glaskeramiken aufweist und eine lange Offenzeit aufweist.

### Darstellung der Erfindung

Es ist die Aufgabe dieser Erfindung, die beschriebenen Nachteile und Probleme der Primer für Glas zu überwinden und einen Primer zur Verfügung zu stellen, welcher gleichzeitig gute Haftung auf Glas und Glaskeramiken

aufweist und eine lange Offenzeit aufweist. Unerwartet wurde gefunden, dass die Nachteile des Standes der Technik durch die erfindungsgemässe Primerzusammensetzung gemäss Anspruch 1 behoben werden konnten. Gleichzeitig ist auch eine gute Haftung bei kurzen Ablüftezeiten beziehungsweise bei kurzen Wartezeiten zwischen Applikation des Primers und des Klebstoffs gewährleistet.

**Wege zur Ausführung der Erfindung**

Die vorliegende Erfindung betrifft eine Primerzusammensetzung, welche eine Isocyanat-reaktive Gruppen aufweisende Verbindung **A1** umfasst. Für die Herstellung dieser Verbindung **A1** werden ein Polyisocyanat **A,** welches mindestens drei Isocyanatgruppen aufweist, sowie mindestens ein Silan **B** der Formel **(I),** sowie ein Vernetzer **C** mit mindestens drei Isocyanat-reaktiven funktionellen Gruppen verwendet.

In der gesamten hier vorliegenden Schrift werden mit der Vorsilbe "Poly" in "Polyisocyanat" und "Polyol" Moleküle bezeichnet, die formal zwei oder mehr der jeweiligen funktionellen Gruppen enthalten.

Unter "Isocyanat-reaktiven funktionellen Gruppen" werden solche chemischen funktionellen Gruppen verstanden, die bei Raumtemperatur oder bei Temperaturen bis 100°C, gegebenenfalls in Gegenwart eines geeigneten Katalysators, mit einer aliphatischen oder aromatischen Isocyanat-Gruppe reagieren.

Das für die Herstellung der Verbindung **A1** verwendete Polyisocyanat **A** weist mindestens 3 Isocyanat-Gruppen auf. Insbesondere sind 3, 4, 5 oder 6, bevorzugt 3 oder 4 , Isocyanat-Gruppen vorhanden.

Es handelt sich bei diesen Polyisocyanaten vorteilhaft um niedermolekulare Polyisocyanate mit einem Molekulargewicht von weniger als 2000 g/mol, insbesondere von weniger als 1000 g/mol. Bevorzugt liegt das Molekulargewicht zwischen 400 und 900 g/mol.

Solche niedermolekulare Polyisocyanate sind einerseits Diisocyanat-Polyol-Addukte, welche durch die Reaktion von niedermolekularen Polyolen mit Diisocyanaten im Diisocyanat-Überschuss hergestellt werden, so dass eine NCO-Funktionalität von drei oder mehr gebildet wird. Beispiele für solche Diisocyanat-Polyol-Addukte sind solche aus einem Polyol, wie sie weiter unten als Vernetzer **C** erwähnt sind und einem aliphatischen oder aromatischen Diisocyanat. Besonders zu erwähnen sind die Addukte aus Trimethylolpropan, Glycerin oder Pentaerythrit als Polyol und HDI, TDI oder IPDI als Diisocyanat.

Andererseits sind solche niedermolekulare Oligomere oder Polymere von Diisocyanaten. Beispielsweise handelt es sich hier um polymeres MDI (4,4'-Diphenylmethandiisocyanat), wie es beispielsweise kommerziell erhältlich ist als Voranate M-580 (Dow).

Besonders geeignet sind niedermolekulare Polymere der Monomeren

- HDI, beispielsweise kommerziell erhältlich als Desmodur N-3300 (Bayer), Desmodur N-3600 (Bayer), Luxate HT 2000 (Lyondell); oder als Desmodur N-100 (Bayer), Luxate HDB 9000 (Lyondell);
- IPDI, beispielsweise kommerziell erhältlich als Desmodur Z 4470 (Bayer), Vestanat T 1890/100 (Hüls), Luxate IT 1070 (Lyondell);
- TDI, beispielsweise kommerziell erhältlich als Desmodur IL (Bayer);
- TDI/HDI.

Insbesondere handelt es sich um Biurete und Isocyanurate, vorzugsweise von niedermolekularen Diisocyanaten. Hierfür geeignete Diisocyanate sind insbesondere 2,4- und 2,6-Toluylendiisocyanat (TDI), 4,4'-Diphenylmethandiisocyanat (MDI) sowie seine Stellungsisomeren, Hexamethylendiisocyanat (HDI), 2,2,4- und 2,4,4-Trimethyl-1,6-hexamethylendiisocyanat, Tetramethoxybutane-1,4-diisocyanat, Butane-1,4-diisocyanat, Dicyclohexylmethandiisocyanat, Cyclohexan-1,3- und 1,4-diisocyanat, 1,12-Dodecamethylendiisocyanat, 1-Isocyanato-3,3,5-trimethyl-5-isocyanatomethylcyclohexan (=Isophorondiisocyanat oder IPDI), sowie die hydrierten Verbindungen der genannten aromatischen Verbindungen. Selbstverständlich sind für die Herstellung der Biurete und Isocyanurate auch Mischungen von Diisocyanaten möglich.

Bevorzugt handelt es sich beim Polyisocyanat **A** um ein Isocyanurat oder ein Biuret der Monomeren ausgewählt aus der Gruppe umfassend HDI, IPDI, TDI und Mischungen davon. Als besonders bevorzugt handelt es ich um ein Isocyanurat von HDI.

Das für die Herstellung der Verbindung **A1** mindestens eine verwendete Silan B weist die Formel (I) auf.

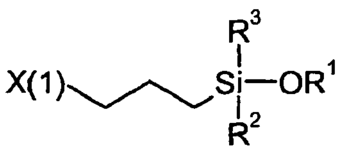 (I)

In Formel (I) steht $R^1$ für Methyl oder Ethyl. Weiterhin steht $R^2$ für H, ein $C_1$-bis $C_4$-Alkyl oder $OR^1$ und $R^3$ steht für H, ein $C_1$-bis $C_4$-Alkyl oder $OR^1$. X(1) bedeutet eine Isocyanat-reaktive Gruppe oder ein Isocyanat-reaktive-Gruppen tragender organischer Rest und ist eine primäre Amino-Gruppe oder ein organischer Rest, welcher mindestens eine primäre Amino-Gruppe aufweist. Bevorzugt handelt es sich bei X(1) um $NH_2$.

Bevorzugt steht $R^1$ für Methyl. Weiterhin bevorzugt ist $R^3 = OR^1$ und noch mehr bevorzugt gilt $R^3 = R^2 = OR^1$.

Beispiele für geeignete Silane B der Formel (I) sind:

3-Aminopropyltrimethoxysilan, N-(2-Aminoethyl)-3-aminopropyltrimethoxysilan, 3-Aminopropyltriethoxysilan, N-(2-Aminoethyl)-3-aminopropyltriethoxysilan, 3-Aminopropylmethyldimethoxysilan, 3-Aminopropylmethyldiethoxysilan, 3-Aminopropyldimethylmethoxysilan, 3-Aminopropyldimethylethoxysilan, N-(2-aminoethyl)-3-aminopropylmethyldimethoxysilan, N-(2-aminoethyl)-3-aminopropylmethyldiethoxysilan, N-aminoethyl-3-aminopropylmethyldimethoxysilan, N-aminoethyl-3-aminopropylmethyldiethoxysilan. Bevorzugt ist 3-Aminopropyltrimethoxysilan.

In einer Ausführungsform der Erfindung wird für die Herstellung der Verbindung **A1** neben dem Silan der Formel (I) mindestens ein weiteres Silan der Formel (I') verwendet

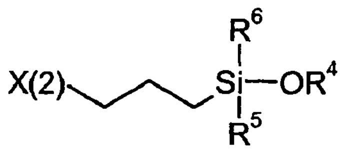

(I')

In Formel (I') steht $R^4$ für Methyl oder Ethyl. Weiterhin steht $R^5$ für H, ein $C_1$-bis $C_4$-Alkyl oder $OR^4$ und $R^6$ steht für H, ein $C_1$-bis $C_4$-Alkyl oder $OR^4$. X(2) bedeutet eine Isocyanat-reaktive Gruppe oder ein Isocyanat-reaktive-Gruppen tragender organischer Rest und ist eine primäre Amino-, Merkapto - oder Hydroxyl- Gruppe oder eine organischer Rest, welcher mindestens eine primäre Amino-, Merkapto- oder Hydroxyl-Gruppe aufweist. Bevorzugt handelt es sich bei X(2) um SH oder um $NH_2$.

Bevorzugt steht $R^4$ für Methyl. Weiterhin bevorzugt ist $R^5 = OR^4$ und noch mehr bevorzugt gilt $R^6 = R^5 = OR^4$.

Beispiele für geeignete Silane **B** der Formel (I') sind:

3-Aminopropyltrimethoxysilan, N-(2-Aminoethyl)-3-aminopropyltrimethoxysilan, 3-Aminopropyltriethoxysilan, N-(2-Aminoethyl)-3-aminopropyltriethoxysilan, 3-Aminopropylmethyldimethoxysilan, 3-Aminopropylmethyldiethoxysilan, 3-Aminopropyldimethylmethoxysilan, 3-Aminopropyldimethylethoxysilan, N-(2-aminoethyl)-3-aminopropylmethyldimethoxysilan, N-(2-aminoethyl)-3-aminopropylmethyldiethoxysilan, N-aminoethyl-3-aminopropylmethyldimethoxysilan, N-aminoethyl-3-aminopropylmethyldiethoxysilan;
3-Mercaptopropyltrimethoxysilan, 3-Mercaptopropyltriethoxysilan, 3-Mercaptopropylmethyldimethoxysilan, Mercaptopropylmethyldiethoxysilan.
Bevorzugt sind 3-Aminopropyltrimethoxysilan, 3-Aminopropyltriethoxysilan oder 3-Mercaptopropyltrimethoxysilan.

Wenn mehrere Silane verwendet werden, können diese als Mischung eingesetzt werden oder zu unterschiedlichen Zeitpunkten in der Herstellung von **A1** eingesetzt werden.

Besonders bevorzugt werden unterschiedliche Silane **B** verwendet. Besonders bevorzugt werden die zwei Silane 3-Aminopropyltrimethoxysilan und 3-Mercaptopropyltrimethoxysilan eingesetzt bei der Herstellung der Verbindung **A1.**

Der für die Herstellung der Verbindung **A1** verwendete Vernetzer **C** weist mindestens drei Isocyanat-reaktive Gruppen auf. Diese Isocyanat-reaktive Gruppen können alle identisch oder unabhängig von einander verschieden von einander sein. Bevorzugt sind alle Gruppen identisch. Die Isocyanat-reaktive Gruppen sind insbesondere ausgewählt aus primäre Aminogruppe ($NH_2$), sekundäre Aminogruppe (NH), Merkaptogruppe (SH) oder Hydroxylgruppe (OH). Bevorzugt ist sie eine Merkapto- oder Hydroxyl-Gruppe.

Es sind mindestens drei Isocyanat-reaktiven Gruppen vorhanden, es können aber auch mehr sein, insbesondere 3, 4, 5 oder 6. Bevorzugt sind 3 oder 4.

Beim Vernetzer **C** handelt es sich vorzugsweise um ein Polyol, besonders um ein Triol.

Der Vernetzer **C** weist vorzugsweise Molekulargewicht von 90 - 1000 g/mol, insbesondere 90 - 500 g/mol, vorzugsweise 120 - 150 g/mol auf. Er weist vorteilhaft ein Equivalenzgewicht von 30 - 350 g/eq, insbesondere 30 - 170 g/eq, bevorzugt 30 - 65 g/eq, bezogen auf die Isocyanat-reaktive funktionelle Gruppe auf, was bei einem Polyol das OH-Equivalenzgewicht bedeutet.

Höhere Molekulargewichte, respektive Equivalenzgewichte, sind weniger vorteilhaft, weil dies vielfach zu schlechten Filmeigenschaften, hohe Viskositäten oder schlechte Lagerfähigkeit des Primers führt.

Beispielsweise handelt es sich beim Vernetzer um Pentaerythrit (= 2,2-Bis-hydroxymethyl-1,3-propandiol), Dipentaerythrit (= 3-(3-Hydroxy-2,2-bis-hydroxymethyl-propoxy)-2,2-bis-hydroxymethyl-propan-1-ol), Glycerin (= 1,2,3-Propantriol), Trimethylolpropan (= 2-Ethyl-2-(hydroxymethyl)-1,3-propandiol), Trimethylolethan (= 2-(hydroxymethyl)-2-Methyl-1,3-propandiol, Di(trimethylolpropan) (= 3-(2,2-Bis-hydroxymethyl-butoxy)-2-ethyl-2-hydroxymethyl-propan-1-ol), Di(trimethylolethan) (= 3-(3-Hydroxy-2-hydroxymethyl-2-methyl-propoxy)-2-hydroxymethyl-2-methyl-propan-1-ol), Diglycerin (= Bis-(2,3-dihydroxypropyl)-ether), Triglycerin (= 1,3-Bis-(2,3-dihydroxypropyl)-2-propanol);
Thioglycerin (=3-Mercapto-1,2-propandiol), 2,3-Dimercapto-1-propanol;
Triethanolamin (= Tris-(2-hydroxyethyl)-amin) oder Triisopropanolamin (= Tris-(2-hydroxypropyl)-amin).

Besonders bevorzugt ist der Vernetzer **C** Trimethylolpropan.

Die Verbindung **A1** kann auf verschiedene Arten hergestellt werden. Insbesondere lässt sich die Verbindung **A1** erhalten durch die Reaktion eines Vernetzers **C** mit einem Zwischenprodukt **AB,** welches vorgängig aus einem Polyisocyanat **A** mit mindestens einem Silan **B** der Formel (I) in stöchiometrischen Überschuss an Isocyanatgruppen des Polyisocyanates **A** in Bezug auf die Isocyanat-reaktiven Gruppen des Silans **B** gebildet wird.

Eine solche Herstellungsart wird für das bessere Verständnis mit folgendem Reaktionsschema vereinfacht für einen bevorzugten Fall illustriert. Dies stellt jedoch nur eine beispielhafte Darstellung dar und kann nicht alle möglichen Varianten abdecken, die sich, insbesondere durch unterschiedliche Anzahl Reaktionspartner und Stöchiometrie, ergeben können.

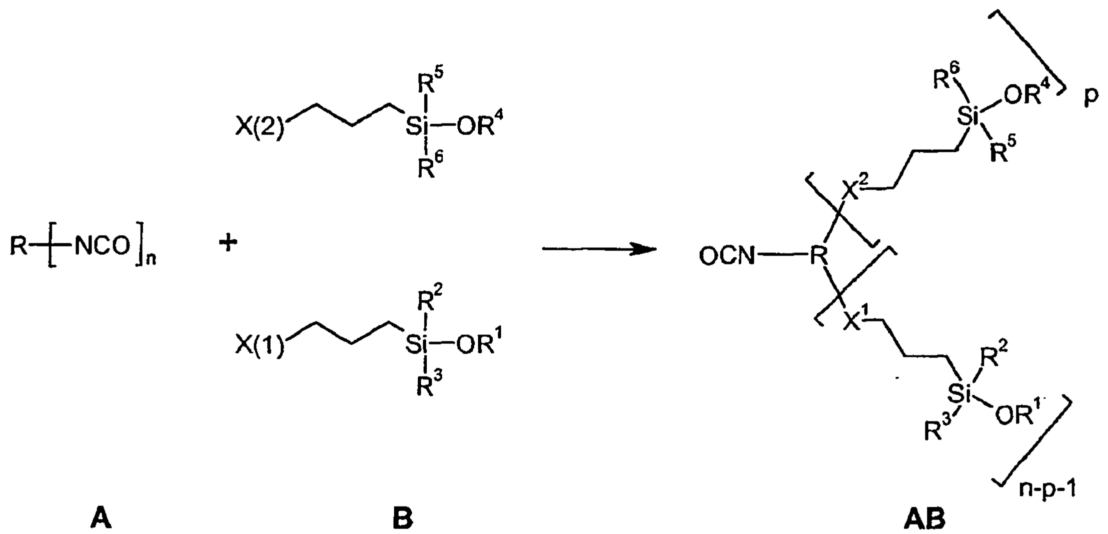

**A** **B** **AB**

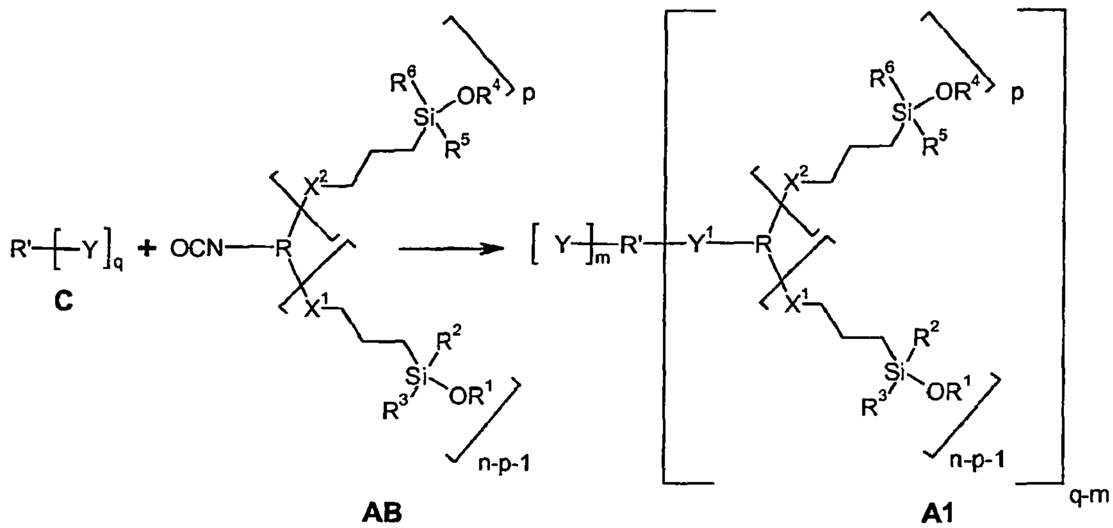

**C** **AB** **A1**

In diesem Beispiel sind zwei Moleküle **B** dargestellt. Die Verwendung von unterschiedlichen Symbolen für die Reste soll veranschaulichen, dass die Reste in Formel (I) unterschiedlich sein können. X(1) und X(2) entsprechen deshalb den möglichen Resten gemäss Formel (I) und (I').

R stellt das Polyisocyanat **A** nach Entfernen aller Isocyanatgruppen dar. Y stellt eine Isocyanat-reaktive Gruppe

des Vernetzers **C** dar und R' den Vernetzer **C** nach Entfernen aller Isocyanat-reaktive Gruppe. $X^1$ bzw. $X^2$ bzw.$Y^1$ stellen jeweils die funktionelle Gruppe dar, die aus der Reaktion von X(1), bzw. X(2), bzw. Y, mit Isocyanat entsteht, d.h. insbesondere eine Harnstoff-, Urethan- oder Thiocarbamat-Gruppe.

Die Indices n respektive q geben die Anzahl Isocyanatgruppen des Polyisocyanates **A** respektive Isocyanat-reaktive Gruppen des Vernetzers **C** an und entsprechen den für diese bereits beschriebenen Werten.

Weiterhin geben p respektive n-p-1 an, wie viele Isocyanatgruppen des Polyisocyanats **A** mit Silane **B** unterschiedlichen Typs unter Bildung des Zwischenproduktes **AB** gebunden werden. Der Index p kann Werte zwischen 0 und n-1 annehmen. In den Fällen p=0 und p=n-1 wird lediglich eines der Silane **B** an das Polyisocyanat A gebunden.

Das Zwischenprodukt **AB** kann eine oder mehrere nicht abreagierte Isocyanat-Gruppe enthalten. Es ist jedoch bevorzugt, dass das Zwischenprodukt **AB** nur eine freie Isocyanat-Gruppe aufweist. Ein solcher Fall ist in obigem Reaktionsschema angegeben. Wenn mehrere freie Isocyanatgruppen in **AB** verbleiben, führt dies tendenziell zu höher molekularen Species und damit zu höheren Viskositäten.

Schliesslich gibt der Index m an, wie viele freie Isocyanat-reaktive funktionelle Gruppen die Verbindung **A1** aufweist. Der Index m nimmt insbesondere die Werte 1, 2, 3 oder 4 an und zwar abhängig von q, so dass $q - m \geq 2$. Bevorzugt ist er 1 oder 2. Als besonders bevorzugt gilt m=1.

Das Zwischenprodukt **AB** kann unter Beteilungen von mindestens einem Silan **B** hergestellt werden. Es können aber auch mehrere Silane **B** beteiligt sein, insbesondere 2 oder 3. Bevorzugt wird das Zwischenprodukt **AB** aus zwei unterschiedlichen Silanen **B** hergestellt. Noch mehr bevorzugt weisen diese zwei Silane der Formel **(I)** unterschiedliche Isocyanat-reaktive Gruppen X(1) und X(2) auf.

Falls mehrere Silane **B** eingesetzt werden, können diese Silane direkt als Mischung in der Herstellung verwendet werden oder nacheinander zugegeben werde. Es hat sich als besonders geeignet gezeigt, wenn zuerst das eine Silan zugegen wird und erst in einem weiteren Schritt ein anderes oder das andere Silan dem Reaktionspartner zugegeben wird.

Die Verbindung **A1** weist mindestens eine Isocyanat-reaktive funktionelle Gruppen auf. Es sind mehrere solche Gruppen möglich. Besonderes handelt es sich um 1, 2, 3 oder 4 solche Gruppen, bevorzugt 1 oder 2 solche Gruppen, besonders bevorzugt um 1 solche Gruppe. Bei der Isocyanat-reaktiven Gruppe handelt es sich insbesondere um eine ausgewählt aus primäre Aminogruppe ($NH_2$), sekundäre Aminogruppe (NH), Merkaptogruppe (SH) oder Hydroxylgruppe (OH). Bevorzugt ist sie eine Merkapto- oder Hydroxyl-Gruppe. Falls die Verbindung **A1** mehrere solche Gruppen aufweiset, können diese Gruppen alle gleich oder verschieden voneinander sein.

Es ist erwünscht einerseits erwünscht, dass die Verbindung durch den Vernetzer **C** vernetzt wird. Andererseits ist es erwünscht, dass sowohl die Primerzusammensetzung als auch die Verbindung **A1** im Wesentlichen keine freien Isocyanatgruppen mehr enthalten, d.h. sie sind im Wesentlichen NCOfrei.

Beides lässt sich vor allem durch die Stöchiometrie-Verhältnisse in der Reaktion des Zwischenproduktes **AB** mit Vernetzer **C** steuern. Es wird deshalb insbesondere nötig, dass die Isocyanat-reaktive Gruppen des Vernetzers im stöchiometrischen Überschuss in Bezug auf die Isocyanatgruppen des Zwischenproduktes **AB** sind. Hierfür wird das Verhältnis r wie folgt definiert:

$$r = \frac{\text{Equivalente NCO-reaktive Gruppen }(\mathbf{C})}{\text{Equivalente NCO Gruppen }(\mathbf{A}) - \sum \text{Equivalente NCO-reaktive Gruppen }(\mathbf{B})}$$

Das Verhältnis ***r*** beträgt Werte von >100%. Die obere Grenze stellt derjenigen Wert dar, in welchem formell ein 1:1 Addukt zwischen Vernetzer **C** und Zwischenprodukt **AB** gebildet wird, d.h. in welchem der Vernetzer keine Vernetzungsrolle mehr inne hat. Der Wert von r soll deshalb klar kleiner als diese oberer Grenze sein, so dass ein wesentlicher Anteil von vernetzten Species vorhanden sind. Wenn zu viele 1:1 adduktierte Moleküle vorhanden sind, ist die Beständigkeit des Primers markant schlechter. Der Anteil der 1:1-Addukte sollte nicht mehr als 20% bezogen auf **A1** sein. Der Wert von r hat deshalb auch einen sehr grossen Einfluss auf die Anzahl freien Isocyanat-reaktiven Gruppen des Endproduktes **A1.**

Es ist dem Fachmann klar, dass neben der Verbindung **A1** sich einerseits auch solche Produkte bilden, bei denen keine freie Isocyanat-reaktiven Gruppen mehr vorhanden sind sowie andererseits sich auch unverbrückte Reaktionsprodukte, d.h. 1:1 Addukte von Vernetzer **C** und Zwischenprodukt **AB,** bilden. Es sollte jedoch darauf geachtet werden, dass der Anteil dieser Nebenprodukte möglichst gering ausfällt.

Für den besonders bevorzugten Fall in dem der Vernetzer **C** ein trifunktionelles Molekül ist, das Zwischenprodukt **AB** eine freie NCO-Gruppe enthält, bewegen sich die Werte von *r* zwischen >100% und < 300% Insbesondere sind hier Werte von 105% - 200%, bevorzugt Werte von 105% - 150%, zu wählen, um einen Kataplasma-beständige Primer zu erhalten.

Eine besonders bevorzugte Ausführungsform der Primerzusammensetzung enthält eine Verbindung **A1,** welche aus einem Isocyanurat der Formel (II) oder einem Biuret der Formel (IIa), zwei Silanen der Formeln (III) und (IV),

sowie Trimethylolpropan (V) hergestellt wird.

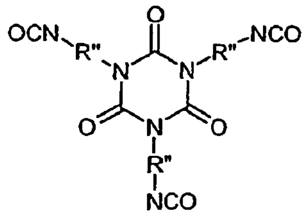

(II)

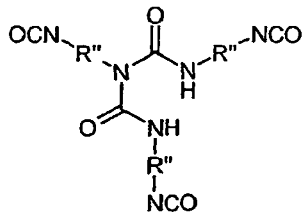

(IIa)

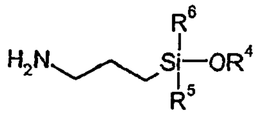

(III)

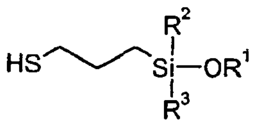

(IV)

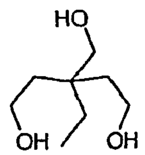

(V)

wobei die Reste $R^1$, $R^2$, $R^3$, $R^4$, $R^5$ und $R^6$ die bereits definierte Reste darstellen. R" ist ein divalenter Rest und stellt insbesondere einen aliphatischen Alkylenrest, bevorzugt den Hexamethylen-Rest dar.

Bevorzugt wird das Zwischenprodukt **AB** in einem Zweischritt-Verfahren erzeugt, insbesondere bei welchem in einer ersten Stufe zuerst das Merkaptosilan und in einer zweiten Stufe das Aminosilan eingesetzt wird.

Die so hergestellten Verbindung **A1** lassen sich durch Formel (VI) und Formel (VII) darstellen.

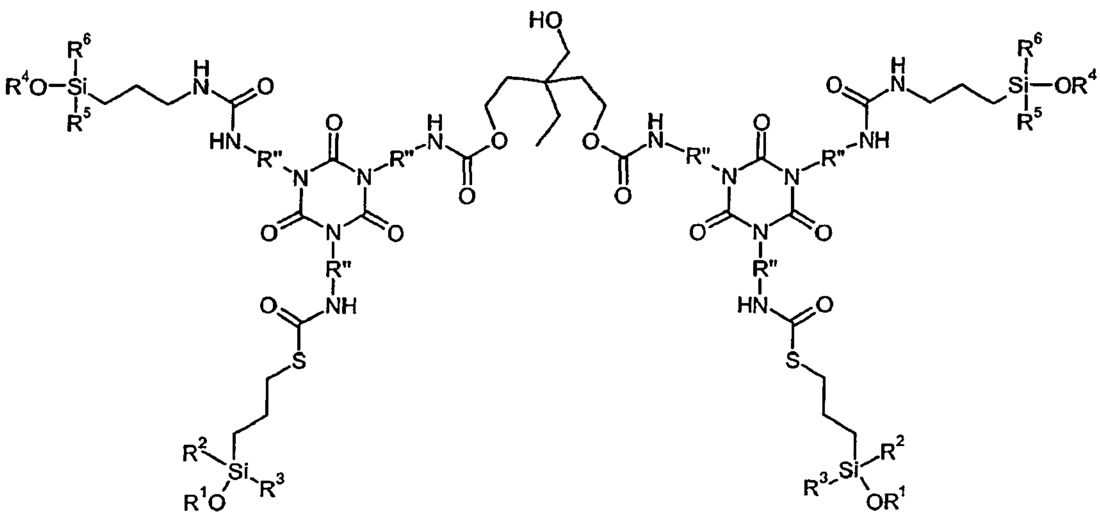

(V

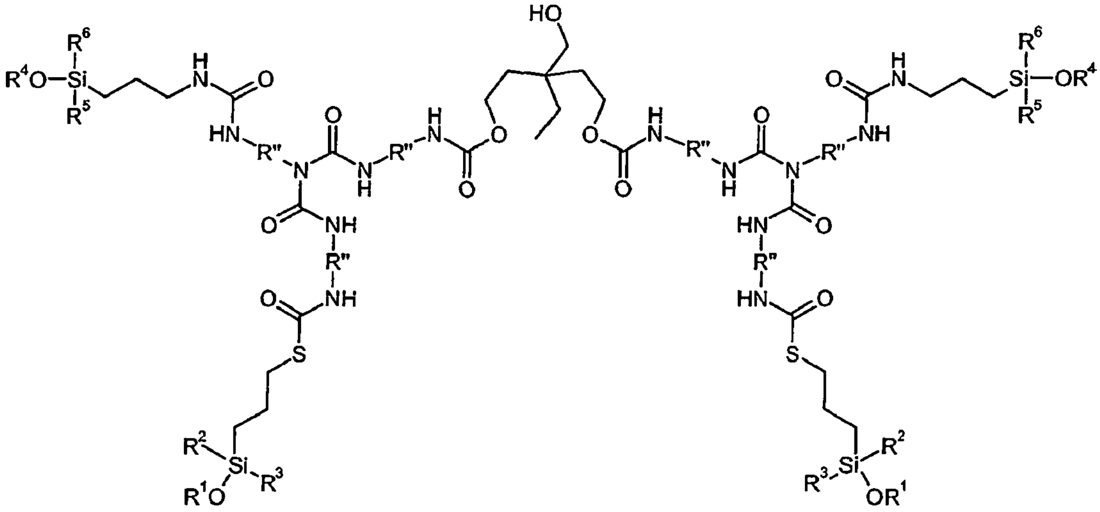

(\

Die Verbindung **A1** weist mindestens eine Isocyanat-reaktive funktionelle Gruppen auf. Es sind mehrere solche Gruppen möglich. Besonderes handelt es sich um 1, 2, 3 oder 4 solche Gruppen, bevorzugt 1 oder 2 solche Gruppen, besonders bevorzugt um 1 solche Gruppe. Bei der Isocyanat-reaktiven Gruppe handelt es sich insbesondere um eine ausgewählt aus primäre Aminogruppe ($NH_2$), sekundäre Aminogruppe (NH), Merkaptogruppe (SH) oder Hydroxylgruppe (OH). Bevorzugt ist sie eine Merkapto- oder Hydroxyl-Gruppe. Falls die Verbindung **A1** mehrere solche Gruppen aufweist, können diese Gruppen alle gleich oder verschieden voneinander sein.

Es ist dem Fachmann klar, dass neben der Verbindung **A1** sich einerseits auch solche Produkte bilden, bei denen keine freie Isocyanat-reaktiven Gruppen mehr vorhanden sind sowie andererseits sich auch unverbrückte Reaktionsprodukte, d.h. 1:1 Addukte von Vernetzer **C** und Zwischenprodukt **AB,** bilden. Es sollte jedoch darauf geachtet werden, dass der Anteil dieser Nebenprodukte möglichst gering ausfällt.

Die Primerzusammensetzung umfasst in einer Ausführungsform weiterhin mindestens ein bei Raumtemperatur gegenüber Isocyanaten inertes Lösungsmittel **LM1.** Dieses Lösungsmittel wird vorzugsweise bereits bei der Herstellung der Verbindung **A1,** beziehungsweise des Zwischenproduktes **AB** eingesetzt. Das Lösungsmittel kann bei Bedarf aber auch erst nach der Herstellung der Verbindung **A1** in die Primerformulierung gelangen. Das Lösungsmittel ist ein flüchtiges Lösungsmittel und umfasst neben aromatischen Lösungsmittel wie Xylol, Toluol, Mesyitlen insbesondere Ester, speziell Acetate sowie Ketone. Insbesondere ist das Lösungsmittel ausgewählt aus der Gruppe umfassend Xylol, Toluol, Aceton, Hexan, Heptan, Octan, Methyl-Ethylketon, Methyl-Propylketon, Methyl-isopropyl-Keton, Methyl-Butylketon, Dieethylketon, Diisopropylketon, Methylacetat, Ethylacetat, Propylacetat, Butylacetat, Methoxyethylacetat, Methoxypropylacetat und 2-(2-Methoxy-ethoxy)-ethylacetat. Bevorzugt werden diese Lösungsmittel in Mischungen verwendet.

Nach der Herstellung der Verbindung **A1** können dem Primer noch weitere Lösungsmittel **LM2** beigefügt werden. Diese Lösungsmittel können auch reaktiv gegenüber Isocyanaten sein. Hierbei handelt es sich bevorzugt um leicht flüchtige Lösungsmittel mit einem Siedepunkt von weniger als 100°C. Insbesondere geeignet hierfür sind Alkohole wie Methanol, Ethanol, Propanol, Isopropanol und sec. Butanol. Besonderes geeignet ist Isopropanol.

Die Lösungsmittel werden hauptsächlich zur Reduktion der Viskosität sowie zur Optimierung des Ablüfteverhaltens eingesetzt.

Weiterhin kann die Primerzusammensetzung Haftvermittler **HV** enthalten. Solche Haftvermittler sind beispielsweise Titanate, Zirkonate oder Silane darstellen. Besonders vorteilhaft handelt es sich beim hierbei um eine siliziumorganische Verbindungen. Bevorzugte siliziumorganische Verbindungen sind einerseits die bereits genannten Silane **B** sowie 3-Glycidyloxypropyltrialkoxysilane, Methacryloxypropyltrialkoxysilane sowie Vinyltrialkoxysilane.

Besonders bevorzugt sind Trialkoxysilane. Es hat sich gezeigt, dass dieser zusätzliche Haftvermittler vorteilhaft ein Trialkoxysilan mit einer primären Aminogruppe, insbesondere eine Trimethoxysilan mit einer primären Aminogruppe, oder eine Trialkoxysilan mit Vinylgruppe ist.

Weiterhin kann die Primerzusammensetzung weiterhin einen Katalysator **KAT** enthalten, insbesondere einen zinnorganischen Katalysator. Diese Katalysatoren sind üblicherweise Polyurethankatalysatoren. Der zinnorganische Katalysator ist vorzugsweise ausgewählt aus der Gruppe umfassend Dibutylzinndilaurat, Dibutylzinndichlorid, Zinn-Thioesterkomplexe, Mono-n-butylzinntrichlorid, Di-n-butylzinnoxid, Di-n-butylzinndiacetat und Dibutylzinncarboxylat.

Weiterhin kann die Primerzusammensetzung mindestens einen Füllstoff **F** umfassen, wie beispielsweise Kieselsäuren, Talk, Kreiden und Russ. Ein besonderes bevorzugter Füllstoff ist Russ.

Weiterhin können in der Primerchemie übliche Additive eingesetzt werden. Beispiele nicht limitierender Art hierfür sind, UV- und Hitzestabilisatoren, Verlaufsmittel, Filmbildner, Thixotropiermittel sowie chemische und physikalische Trocknungsmittel.

Eine besonders bevorzugte Ausführungsform einer Primerzusammensetzung umfasst neben der Verbindung **A1** mindestens ein Lösungsmittel **LM1,** mindestens einen Haftvermittler **HV,** einen Katalysator **KAT** sowie Russ als Füllstoff F.

Die beschriebene Zusammensetzung wird hergestellt und aufbewahrt unter Ausschluss von Feuchtigkeit.

Die Primerzusammensetzung eignet sich als Primer für diverse Untergründe. Besonders geeignet ist er für Glas, Glaskeramiken, Metalle und Legierungen sowie diverse Kunststoffe. Die erfindungsgemässe Primerzusammensetzung eignet sich speziell gut Glas und Glaskeramiken, insbesondere solche wie sie in der Automobilindustrie verwendet werden.

Es kann von Vorteil sein, dass vor der Applikation vorteilhafterweise die Substrate vorbehandelt werden. Solche Vorbehandlungsmethoden beinhalten physikalische und/oder chemischen Vorbehandlung, beispielsweise Schleifen, Sandstrahlen, Bürsten oder dergleichen, oder durch Behandeln mit Reinigern, Lösungsmitteln, Haftvermittlern, Haftvermittlerlösungen.

Der Primer wird mittels Pinsel, Filz, Tuch oder Schwamm auf ein Substrat aufgetragen. Dieser Auftrag kann manuell oder automatisch, insbesondere mittels Roboter, erfolgen. Weiterhin können auch mehrere Schichten der Primerzusammensetzung appliziert werden.

Die Primerzusammensetzung wird vorteilhaft als Primer für Klebstoffe, Dichtmassen oder Bodenbeläge, insbesondere 1-komponentige feuchtigkeitshärtenende Polyurethanklebstoffe oder -dichtmassen auf Basis von Polyurethanen oder Polyurethan-Silan-Hybriden verwendet. Bevorzugte Einsatzgebiete dieser Primer sind Gebiete, wo auch industriell gefertigte Komponenten verklebt werden. Es handelt sich insbesondere um Anwendungen, wo der Primer im Werk eines Zulieferanten appliziert wird.

Die erfindungsgemässe Primerzusammensetzung zeichnet sich durch eine ausgezeichnete Haftung auf Glas und Glaskeramiken aus, die selbst nach drastischer Belastungen, sie beispielsweise im Kataplasma-Test (7 Tage Lagerung in 100% rel. Luftfeuchtigkeit bei 70°C) erhalten bleiben. Weiterhin zeichnet sich der Primer durch eine lange Offenzeit von mehr als einem Monat aus. Ausserordentlich ist weiterhin, dass der erfindungsgemässe Primer bereits nach kurzen Ablüftezeiten von typischerweise 30 Sekunden verwendet werden kann.

**Beispiele**

| Rohstoffe | Bezugsquelle |
|---|---|
| Methyl-Ethylketon (‚MEK') | Scheller,Thommen |
| 4-Toluensulfonylisocyanat ('TI') | Bayer |
| Desmodur N100 (‚N100') (NCO-Gehalt 22%) | Bayer |
| 3-Aminopropyltrimethoxysilan (Silquest A-1110) ('Aminosilan') | Osi Crompton |
| N-Butyl-3-aminopropyltrimethoxysilan (Dynasilan A-1189) ('sek.Aminosilan') | Degusta-Hüls |
| 3-Mercaptopropyltrimethoxysilan (Silquest A-189) ('Mercaptosilan') | Osi Crompton |
| Vinyltrimethoxysilan (Silquest A-171) ('Vinylsilan') | Osi Crompton |
| Trimethylolpropan | BASF |
| Dibutylzinndilaurat | Rohm & Haas |

**Primer-Zusammensetzungen**

Beispielshafte Herstellung einer Primerzusammensetzung: ***P-01***

161.8 g Desmodur N100 wird in einem ersten Schritt im 54 g 1:1-Lösungsmittelgemisch von Xylol und Methoxypropylacetat mit 54.2 g Mercaptosilan unter Inert-Atmosphäre während 4 Stunden bei erhöhter Temperatur zur Reaktion gebracht. Das Mercaptosilan wird langsam zugegeben.

In einem daran anschliessenden Schritt wird dem Produkt des ersten Verfahrensschrittes 64 g Aminosilan in Gegenwart von 5 g Trocknungsmittel sowie 649.2 g Methylethylketon unter Inert-Atmosphäre langsam zugetropft. Nach Beendigung dieser Reaktion wird 11.5 g Trimethylolpropan unter Rühren bei erhöhter Temperatur langsam zugegeben, bis kein messbarer NCO-Gehalt mehr gemessen werden kann. Am Ende werden noch die zusätzlichen Bestandteile

wie Katalysator und Vinylsilan zugemischt.

Tabelle 1. Primerzusammensetzungen

| | | P-01 | P-02 | P-03 | P-04 | P-05 | P-06 | P-07 | Ref. |
|---|---|---|---|---|---|---|---|---|---|
| **A** | N100 | 16.18 | 16.18 | 16.18 | 16.18 | 16.18 | 16.18 | 16.18 | 16.18 |
| **B** | Mercaptosilan | 5.42 | 5.42 | 5.42 | 5.42 | 5.42 | 5.42 | 5.42 | 5.42 |
| **B** | Aminosilan | 6.40 | 6.40 | 6.40 | 4.00 | 8.00 | 6.40 | 6.40 | 6.40 |
| **C** | Trimethylolpropan | 1.15 | 1.05 | 1.30 | 1.75 | 0.75 | 1.15 | 2.63 | |
| | Xylol/Methoxy-propylacetat (1/1) (w/w) | 5.40 | 5.40 | 5.40 | 5.40 | 5.40 | 5.40 | 5.40 | 5.40 |
| | Methylethylketon | 64.92 | 65.02 | 64.77 | 66.72 | 63.72 | 64.42 | 62.94 | 65.57 |
| | Trocknungsmittel | 0.50 | 0.50 | 0.50 | 0.50 | 0.50 | 0.50 | 0.50 | 0.50 |
| | DBTL | 0.03 | 0.03 | 0.03 | 0.03 | 0.03 | 0.03 | 0.03 | 0.03 |
| | Vinylsilan | | | | | | 0.50 | 0.50 | 0.50 |
| | | | | | | | | | |
| | *r* | 120% | 109% | 135% | 112% | 134% | 120% | 274% | 0% |

Tabelle 1a. Primerzusammensetzungen (cont.)

| | | P-01 | P-08 | Ref. | Ref-1. | Ref.-2 | Ref.-3 |
|---|---|---|---|---|---|---|---|
| **A** | N100 | 16.18 | 16.18 | 16.18 | 16.18 | 16.18 | 16.18 |
| **B** | Mercaptosilan | 5.42 | | 5.42 | 5.42 | | 12.43 |
| **B** | Aminosilan | 6.40 | 11.35 | 6.40 | | | |
| | sek.Aminosilan | | | | 8.40 | 14.90 | |
| **C** | Trimethylolpropan | 1.15 | 1.15 | | 1.15 | 1.15 | 1.15 |
| | Xylol/Methoxy-propylacetat (1/1)(w/w) | 5.40 | 5.40 | 5.40 | 5.40 | 5.40 | 5.40 |
| | Methylethylketon | 64.92 | 65.02 | 65.57 | 65.02 | 65.02 | 65.02 |
| | Trocknungsmittel | 0.50 | 0.50 | 0.50 | 0.50 | 0.50 | 0.50 |
| | DBTL | 0.03 | 0.03 | 0.03 | 0.03 | 0.03 | 0.03 |
| | Vinylsilan | | | 0.50 | 0.50 | 0.50 | 0.50 |
| | | | | | | | |
| | *r* | 120% | 120% | 0% | 120% | 120% | 120% |

Die weiteren Beispiele ***P-02*** bis ***P-08*** wurden in analoger Weise mit den in Tabelle 1 angegebenen Mengen hergestellt. Das Referenz-Beispiel ***Ref.*** weist keinen Vernetzer **C** auf. Die Referenzbeispiele ***Ref.1.,*** beziehungsweise ***Ref-2.,*** entsprechen den Beispielen ***P-01,*** beziehungsweise ***P-08,*** wobei jedoch das primäre Aminosilan molmässig durch ein sekundäres Aminosilan ersetzt wurde. Das Referenzbeispiel ***Ref-3*** entsprechen den Beispielen ***P-01,*** wobei jedoch das primäre Aminosilan molmässig durch das Mercaptosilan ersetzt wurde, und somit kein primäres Aminosilane umfasst.

**Untergrundvorbereitung und Applikation des Primers**

| Untergrund | Bezugsquelle |
|---|---|
| Floatglas | Firma Rocholl, Schönbrunn, Deutschland |

(fortgesetzt)

| Untergrund | Bezugsquelle |
|---|---|
| Glas mit Bismut-basierender Keramikbeschichtung Cerdec 14259 | Firma Rocholl, Schönbrunn, Deutschland |

Die Untergründe wurden mit einem Gemisch Isopropanol/Wasser (1/1 w/w) gereinigt. Nach einer Wartezeit von 5 Minuten wurde der Primer auftragen. Bei Glas wurde nicht die Zinn-Seite für die Haftungen verwendet.

## Applikation des Klebestoffs und Testmethoden

Nach einer in Tabelle 2 spezifizierten Wartezeit t nach der Applikation des Primers wurde auf den Primer eine Klebstoffraupe eines Klebstoff appliziert. Es handelte sich hierbei um die folgenden bei Sika Schweiz AG kommerziell erhältlichen feuchtigkeitshärtenden Polyurethan- oder silanmodifizierten Polyurethanklebstoffe:

| | |
|---|---|
| Sikaflex®-250 HMA-1 | (’HMA-1) |
| Sikaflex®-250 DM-1 | (‚DM-1’) |
| Sikaflex®-250 DM-2 | (’DM-2’) |
| Sikaflex®-555 | (‚SF-555’) |

Der Klebstoff wurde nach einer Aushärtezeit von 7 Tagen Klimaraumlagerung (’KL’) (23°C, 50% rel. Luftfeuchtigkeit) sowie nach einer anschliessend Kataplasma-Lagerung (‚CP’) von 7 Tagen bei 70°C, 100 % rel. Luftfeuchtigkeit, getestet.

Die Haftung des Klebstoffes wurde mittels ’Raupentest’ getestet. Hierbei wird am Ende knapp über der Klebefläche eingeschnitten. Das eingeschnittene Ende der Raupe wird mit einer Rundzange Zange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen der kohäsiven Anteils der Haftfläche:

1 = > 95 % Kohäsionsbruch
2 = 75 - 95 % Kohäsionsbruch
3 = 25 - 75 % Kohäsionsbruch
4 = < 25 % Kohäsionsbruch

Durch den Zusatz "FH" wird angegeben, dass der Klebstoff eine Filmhaftung auf dem Primer aufweist, so dass der Bruch zwischen Primer und Klebstoff erfolgt. Durch den Zusatz "P" wird angezeigt, dass der Primer sich vom Untergrund ablöst und deshalb die Haftung des Primers auf dem Untergrund eine Schwachstelle darstellt. Testresultate mit Kohäsionsbrüchen von weniger als 75% gelten als ungenügend.

## Resultate

Tabelle 2 zeigt die Resultate der Haftprüfungen auf Glas der Beispiele ***P-01*** bis ***P-07*** sowie des Referenzbeispiels ***Ref***. bei kurzen (1 Minute, 10 Minuten) und langen (1 Woche, 2 Wochen, 1 Monat) Offenzeiten Wartezeiten zwischen Applikation des Primers und der Klebstoffe dargestellt.

Tabelle 2 Haftresultate von Primer mit unterschiedlichen Offenzeiten.

| | **Offenzeit** | **1 min** | | **10 min** | | **1 w** | | **2 w** | | **1 m** | |
|---|---|---|---|---|---|---|---|---|---|---|---|
| | **Lagerung** | **KL** | **CP** | **KL** | **CP** | **KL** | **CP** | **KL** | **CP** | **KL** | **CP** |
| **Primer** | **Klebstoff** | | | | | | | | | | |
| ***P-01*** | HMA-1 | 1 | 1 | 1 | 1 | 1 | 1 | 1 | 1 | 4 | 1 |
| ***P-01*** | DM-1 | 1 | 1 | 1 | 1 | 1 | 1 | 3FH | 1 | 2 | 1 |
| ***P-01*** | DM-2 | 1 | 1 | 1 | 1-2 | 1 | 1 | 1 | 1 | 1-2 | 1 |

(fortgesetzt)

| Primer | Klebstoff | | | | | | | | | | |
|---|---|---|---|---|---|---|---|---|---|---|---|
| ***P-01*** | SF-555 | 1 | 1 | 1 | 1-2 | 1 | 1 | 1 | 1 | 1 | 1 |
| | | | | | | | | | | | |
| ***P-02*** | HMA-1 | 1 | 1 | 1 | 1 | 1 | 1 | 1 | 2 | 4 | 1 |
| ***P-02*** | DM-1 | 1 | 1 | 1 | 1 | 1 | 1 | 1 | 2 | 2 | 1 |
| ***P-02*** | DM-2 | 1 | 1 | 1 | 1 | 1 | 1 | 1 | 1 | 1-2 | 1 |
| ***P-02*** | SF-555 | 1 | 1 | 1 | 2P | 1 | 1 | 1 | 1 | 1 | 1 |
| | | | | | | | | | | | |
| ***P-03*** | HMA-1 | 1 | 1 | 1 | 1 | 1 | 1 | 1 | 3 | 4 | 1 |
| ***P-03*** | DM-1 | 1 | 1 | 1 | 1 | 1 | 1 | 1 | 1 | 2 | 1 |
| ***P-03*** | DM-2 | 1 | 1 | 1 | 1 | 1 | 1 | 1 | 2 | 1-2 | 1 |
| ***P-03*** | SF-555 | 1 | 1 | 1 | 1 | 1 | 1 | 1 | 1 | 1 | 1 |
| | | | | | | | | | | | |
| ***P-04*** | HMA-1 | 1 | 1 | 1 | 1 | 1 | 1 | 2 | 2 | 4 | 1 |
| ***P-04*** | DM-1 | 1 | 1 | 1 | 1 | 1 | 1 | 1 | 1 | 3 | 1 |
| ***P-04*** | DM-2 | 1 | 2-3P | 1 | 1 | 1 | 1 | 1 | 1 | 2-3 | 1 |
| ***P-04*** | SF-555 | 1 | 1 | 1 | 1 | 1 | 1 | 1 | 1 | 1 | 1 |
| | | | | | | | | | | | |
| ***P-05*** | HMA-1 | 1 | 2TB | 1 | 1 | 1 | 1 | 1 | 4P | 4 | 1 |
| ***P-05*** | DM-1 | 1 | 1 | 1 | 1 | 1 | 1 | 1 | 4P | 1-2 | 1 |
| ***P-05*** | DM-2 | 4FH | 4FH | 1 | 4FH | 1 | 1 | 1 | 4P | 1-2 | 1 |
| ***P-05*** | SF-555 | 2 | 3 | 1 | 1 | 1 | 1 | 1 | 1 | 1 | 1 |
| | | | | | | | | | | | |
| ***P-06*** | HMA-1 | 1 | 2 | 1 | 4 | 2 | 1 | 2 | 1 | 4 | 1 |
| ***P-06*** | DM-1 | 1 | 2 | 1 | 2 | 1 | 1 | 1 | 1 | 3 | 1 |
| ***P-06*** | DM-2 | 1 | 2 | 1 | 4 | 1 | 2 | 1 | 1 | 1 | 1 |
| | | | | | | | | | | | |
| ***P-06*** | SF-555 | 1 | 1 | 1 | 1 | 1 | 4 | 1 | 1 | 1 | 4 |
| | | | | | | | | | | | |
| ***P-07*** | HMA-1 | 3 | 4 | 3 | 4 | 1 | 1 | 1 | 3-4 | 1 | 4 |
| ***P-07*** | DM-1 | 3-4 | 3 | 3 | 4 | 1 | 1 | 1 | 2-3 | 1 | 1 |
| ***P-07*** | DM-2 | 3 | 3 | 3 | 4 | 1 | 2 | 1 | 3-4 | 1 | 1 |
| ***P-07*** | SF-555 | 1 | 1 | 1 | 1 | 1 | 1 | 1 | 3-4 | 1 | 3 |
| | | | | | | | | | | | |
| ***Ref.*** | HMA-1 | 4 | 4 | 4 | 4 | 4 | 4 | 4 | 4 | 4 | 4 |
| ***Ref.*** | DM-1 | 4 | 4 | 4 | 4 | 4 | 4 | 3 | 4 | 3 | 4 |
| ***Ref.*** | DM-2 | 4 | 4 | 4 | 4 | 4 | 4 | 3 | 4 | 4 | 4 |
| ***Ref.*** | SF-555 | 1 | 1 | 1 | 1 | 1 | 4 | 1 | 4 | 1 | 4 |
| | | | | | | | | | | | |

(fortgesetzt)

| Primer | Klebstoff | | | | | | | | | | |
|---|---|---|---|---|---|---|---|---|---|---|---|
| - | HMA-1 | 4 | 4 | 4 | 4 | 4 | 4 | 4 | 4 | 4 | 4 |
| - | DM-1 | 4 | 4 | 4 | 4 | 4 | 4 | 4 | 4 | 4 | 4 |
| - | DM-2 | 4 | 4 | 4 | 4 | 4 | 4 | 4 | 4 | 4 | 4 |
| - | SF-555 | 1 | 2-3 | 1 | 2-3 | 1 | 2-3 | 1 | 2-3 | 1 | 2-3 |

Tabelle 3 Haftung auf Glas und Glaskeramik

| | **Substrat** | **G Glas** | | **Glask eramik** | |
|---|---|---|---|---|---|
| | **Offenzeit** | **10 min** | | **10 min** | |
| | **Lagerung** | **KL** | **CP** | **KL** | **CP** |
| **Primer** | **Klebstoff** | | | | |
| ***P-01*** | HMA-1 | 1 | 1 | 1 | 1 |
| ***P-01*** | DM-1 | 1 | 1 | 1 | 1 |
| ***P-01*** | DM-2 | 1 | 1-2 | 1 | 1 |
| ***P-01*** | SF-555 | 1 | 1-2 | 1 | 1 |
| | | | | | |
| ***P-02*** | HMA-1 | 1 | 1 | 1 | 1 |
| ***P-02*** | DM-1 | 1 | 1 | 1 | 1 |
| ***P-02*** | DM-2 | 1 | 1 | 1 | 1 |
| ***P-02*** | SF-555 | 1 | 2P | 1 | 1 |
| | | | | | |
| ***P-03*** | HMA-1 | 1 | 1 | 1 | 1 |
| ***P-03*** | DM-1 | 1 | 1 | 1 | 1 |
| ***P-03*** | DM-2 | 1 | 1 | 1 | 1 |
| ***P-03*** | SF-555 | 1 | 1 | 1 | 1 |
| | | | | | |
| ***P-04*** | HMA-1 | 1 | 1 | 1 | 1 |
| ***P-04*** | DM-1 | 1 | 1 | 1 | 1 |
| ***P-04*** | DM-2 | 1 | 1 | 1 | 1 |
| ***P-04*** | SF-555 | 1 | 1 | 1 | 1 |
| | | | | | |
| ***P-05*** | HMA-1 | 1 | 1 | 1 | 1 |
| ***P-05*** | DM-1 | 1 | 1 | 1 | 1 |
| ***P-05*** | DM-2 | 1 | 4FH | 4FH | 4FH |
| ***P-05*** | SF-555 | 1 | 1 | 1 | 1 |
| | | | | | |
| ***P-08*** | DM-1 | 1 | 1 | 1 | 2 |
| ***P-08*** | DM-2 | 1 | 2 | 1 | 2 |
| ***P-08*** | SF-555 | 1 | 2 | 2 | 1 |

(fortgesetzt)

| Primer | Klebstoff | | | | |
|---|---|---|---|---|---|
| | | | | | |
| ***Ref-1*** | DM-1 | 4 | 4 | 3 | 4 |
| ***Ref-1*** | DM-2 | 5 | 4 | 2 | 3 |
| ***Ref-1*** | SF-555 | 2 | 2 | 3 | 3 |
| | | | | | |
| ***Ref-2*** | DM-1 | 4 | 5 | 4 | 3 |
| ***Ref-2*** | DM-2 | 4 | 5 | 1 | 2 |
| ***Ref-2*** | SF-555 | 2 | 2 | 3 | 1 |
| | | | | | |
| ***Ref-3*** | DM-1 | 3 | 4 | 3 | 3 |
| ***Ref-3*** | DM-2 | 4 | 4 | 4 | 4 |
| ***Ref-3*** | SF-555 | 1 | 2 | 2 | 1 |
| | | | | | |
| - | HMA-1 | 4 | 4 | 4 | 4 |
| - | DM-1 | 4 | 4 | 4 | 4 |
| - | DM-2 | 4 | 4 | 4 | 4 |
| - | SF-555 | 1 | 2-3 | 1 | 4 |

Tabelle 2 zeigt, dass die erfindungsgemässen Primer sich durch eine exzellente Haftung auf Glas auszeichnen. Weiterhin ist ersichtlich, dass das Beispiel ***P-06*** im Vergleich zu den anderen Beispielen ***P-01*** bis ***P-05,*** insbesondere bei kurzen Offenzeiten, wesentlich schlechtere Haftungen aufweist, aber immer noch deutlich besser ist als das Referenzbeispiel ***Ref.*** sowie das Beispiel ohne Primer.
Der Vergleich zwischen Haftung auf Glas und Glaskeramik in Tabelle 3 zeigt, dass die erfindungsgemässen Primer äusserst gute Haftung sowohl auf Glas als auch auf Glaskeramik aufweisen. Beim silanmodifizierten Klebstoff Sikaflex®-555 zeigt es sich, dass auch bei Glaskeramiken die Haftung sowohl bei Klimalagerung als auch Kataplasma erhalten bliebt. Beim Primer ***P-05*** wies der Klebstoff gewisse Schwächen in der Haftung auf, dadurch dass eine Filmhaftung auftrat, das heisst jedoch, dass der Primer eine gute Haftung auf dem Untergrund aufwies.
Ein mit 10% Russ gefüllter Primer ***P-01f*** wurde basierend auf Primer ***P-01*** hergestellt. In Tabelle 4 werden seine Haftungsresultate nach unschiedlich langer Lagerung gezeigt. Der Primer wurde hierfür die in Tabelle angegeben Zeit bei der angegebenen Temperatur gelagert und anschliessend auf Glas wie beschrieben appliziert. Darauf hin wurde nach der angegebenen Offenzeit der Klebstoff appliziert und nach 7 Tagen Aushärtung beziehungsweise nach der anschliessenden Kataplasma-Lagerung von 7 Tagen geprüft.

Tabelle 4. Haftungen als Funktion von Lagerdauer und Offenzeit von ***P-01f.***

| ***P-01f*** | | **Offenzeit** | **3** | **min** | **10** | **min** | **2** | **m** | **3** | **m** | **4** | **m** |
|---|---|---|---|---|---|---|---|---|---|---|---|---|
| **Temperatur** | **Dauer** | **Klebstoff** | **KL** | **CP** | **KL** | **CP** | **KL** | **CP** | **KL** | **CP** | **KL** | **CP** |
| 23°C | 1 m | HMA-1 | 1 | 1 | 1 | 1 | 1 | 1 | 1 | 1 | 4 | 3 |
| | | DM-1 | 1 | 1 | 1 | 1 | 1 | 1 | 1 | 1 | 1 | 1 |
| | | DM-2 | 1 | 3 | 1 | 2 | 1 | 1 | 1 | 1 | 1 | 1 |
| | | | | | | | | | | | | |
| 23°C | 9 m | HMA-1 | 1 | 4 | n.b. | n.b. | 1 | 1 | 4 | 4 | n.b. | n.b. |
| | | DM-1 | 1 | 1 | n.b. | n.b. | 1 | 1 | 4 | 4 | n.b. | n.b. |
| | | DM-2 | 1 | 1 | n.b. | n.b. | 3 | 4 | 1 | 1 | 1 | 1 |

(fortgesetzt)

| *P-01f* | | Offenzeit | 3 | min | 10 | min | 2 | m | 3 | m | 4 | m |
|---|---|---|---|---|---|---|---|---|---|---|---|---|
| **Temperatur** | **Dauer** | **Klebstoff** | **KL** | **CP** | **KL** | **CP** | **KL** | **CP** | **KL** | **CP** | **KL** | **CP** |
| | | | | | | | | | | | | |
| 23°C | 12 m | HMA-1 | n.b. | n.b. | 3 | 1 | 1 | 1 | 1 | 3 | n.b. | n.b. |
| | | DM-1 | n.b. | n.b. | 3 | 1 | 1 | 5 | 1 | 1 | n.b. | n.b. |
| | | DM-2 | n.b. | n.b. | 1 | 1 | 1 | 1 | 1 | 1 | n.b. | n.b. |
| | | | | | | | | | | | | |
| 50°C | 1 m | HMA-1 | 1 | 1 | 1 | 1 | 3 | 1 | 3 | 2 | 4 | 1 |
| | | DM-1 | 1 | 1 | 1 | 1 | 3 | 1 | 1 | 1 | 3 | 1 |
| | | DM-2 | 1 | 1 | 1 | 1-2 | 2 | 1 | 2 | 1 | 2 | 1 |
| (n.b. = nicht bestimmt) | | | | | | | | | | | | |

Aus den Resultaten der Tabelle 4 ist ersichtlich, dass die Primer eine lange Lagerstabilität aufweisen und über lange Offenzeiten verfügen.
Die Resultate der beschleunigten Alterung, d. h. 1 Monat bei 50°C, zeigen, dass sich vor allem bei längeren Offenzeiten die Haftung verschlechtert.

## Patentansprüche

**1.** Primerzusammensetzung umfassend eine Isocyanat-reaktive Gruppen aufweisende Verbindung **A1** zu deren Herstellung verwendet werden

- ein Polyisocyanat **A,** welches mindestens drei Isocyanatgruppen aufweist;
- mindestens ein Silan B der Formel (I)

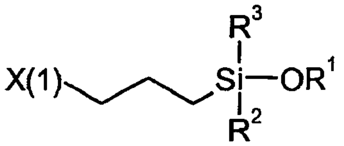

(I)

wobei $R^1$ für Methyl oder Ethyl steht,
$R^2$ für H, ein $C_1$-bis $C_4$-Alkyl oder $OR^1$ steht,
$R^3$ für H, ein $C_1$-bis $C_4$-Alkyl oder $OR^1$ steht,
X(1) eine primäre Amino-Gruppe oder ein mindestens eine primäre Amino-Gruppen tragender organischer Rest darstellt und ;

- ein Vernetzer **C** mit mindestens drei Isocyanat-reaktiven funktionellen Gruppen.

**2.** Primerzusammensetzung gemäss Anspruch 1, **dadurch gekennzeichnet, dass** für die Herstellung der Isocyanat-reaktive Gruppen aufweisenden Verbindung **A1** mindestens ein weiteres Silan **B** der Formel (I') verwendet wird

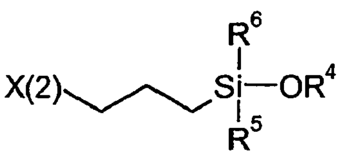

(I')

wobei $R^4$ für Methyl oder Ethyl steht,
$R^5$ für H, ein $C_1$-bis $C_4$-Alkyl oder $OR^4$ steht,
$R^6$ für H, ein $C_1$-bis $C_4$-Alkyl oder $OR^4$ steht,
X(2) eine primäre Amino- oder Merkapto- oder Hydroxyl-Gruppe oder ein organischer Rest, welcher mindestens eine primäre Amino- oder Merkapto- oder Hydroxyl-Gruppe, trägt, darstellt.

3. Primerzusammensetzung gemäss Anspruch 2, **dadurch gekennzeichnet, dass** in Silan **B** $R^6=OR^4$, insbesondere $R^6=R^5=OR^4$, ist.

4. Primerzusammensetzung gemäss Anspruch 2 oder 3, **dadurch gekennzeichnet, dass** in Silan **B** $R^4$= Methyl ist.

5. Primerzusammensetzung gemäss einem der Ansprüche 2 bis 4, **dadurch gekennzeichnet, dass** in Silan **B** X(2) = SH, $NH_2$ oder OH, insbesondere SH, ist.

6. Primerzusammensetzung gemäss einem der einem der vorhergehenden Ansprüche, **dadurch gekennzeichnet, dass** die Primerzusammensetzung im wesentlichen frei von Isocyanatgruppen ist.

7. Primerzusammensetzung gemäss einem der einem der vorhergehenden Ansprüche, **dadurch gekennzeichnet, dass** das Polyisocyanat **A** ein Biuret oder ein Isocyanurat eines oder mehrerer Diisocyanate oder ein Polyisocyanat-Polyol-Addukt ist.

8. Primerzusammensetzung gemäss einem der vorhergehenden Ansprüche, **dadurch gekennzeichnet, dass** das Polyisocyanat **A** ein Isocyanurat eines aliphatischen Diisocyanates, vorzugsweise ein Isocyanurat von Hexamethylendiisocyanat, ist.

9. Primerzusammensetzung gemäss einem der vorhergehenden Ansprüche, **dadurch gekennzeichnet, dass** in Silan **B** $R^3=OR^1$, insbesondere $R^3=R^2=OR^1$, ist.

10. Primerzusammensetzung gemäss einem der vorhergehenden Ansprüche, **dadurch gekennzeichnet, dass** in Silan **B** $R^1$ = Methyl ist.

11. Primerzusammensetzung gemäss einem der vorhergehenden Ansprüche, **dadurch gekennzeichnet, dass** die mindestens drei Isocyanat-reaktiven funktionellen Gruppen des Vernetzers **C** alle identisch oder unabhängig voneinander verschieden, bevorzugt alle identisch, sind und ausgewählt aus SH, OH, NH oder $NH_2$ sind.

12. Primerzusammensetzung gemäss einem der vorhergehenden Ansprüche, **dadurch gekennzeichnet, dass** der Vernetzer **C** ein Polyol, insbesondere ein Triol, ist.

13. Primerzusammensetzung gemäss Anspruch 12, **dadurch gekennzeichnet, dass** der Vernetzer **C** ein OH-Equivalenzgewicht von 30 - 350 g/eq, insbesondere 30 -170 g/eq, bevorzugt 30 - 65 g/eq, aufweist.

14. Primerzusammensetzung gemäss einem der vorhergehenden Ansprüche, **dadurch gekennzeichnet, dass** der Vernetzer **C** ein Molekulargewicht von 90 - 1000 g/mol, insbesondere 90 - 500 g/mol, vorzugsweise 120 -150 g/mol aufweist.

15. Primerzusammensetzung gemäss einem der vorhergehenden Ansprüche, **dadurch gekennzeichnet, dass** die Verbindung **A1** das Reaktionsprodukt eines Vernetzers **C** und eines Isocyanatgruppen tragenden Zwischenproduktes **AB,** welches vorgängig aus einem Polyisocyanat **A** und mindestens einem Silan **B** der Formel (I) in einem stöchiometrischen Überschuss an Isocyanatgruppen des Polyisocyanates **A** in Bezug auf die Isocyanat-reaktiven Gruppen des Silans **B** gebildet wird, ist.

16. Primerzusammensetzung gemäss einem der vorhergehenden Ansprüche, **dadurch gekennzeichnet, dass** die Verbindung **A1** die Formel (VI) oder (VII) aufweist

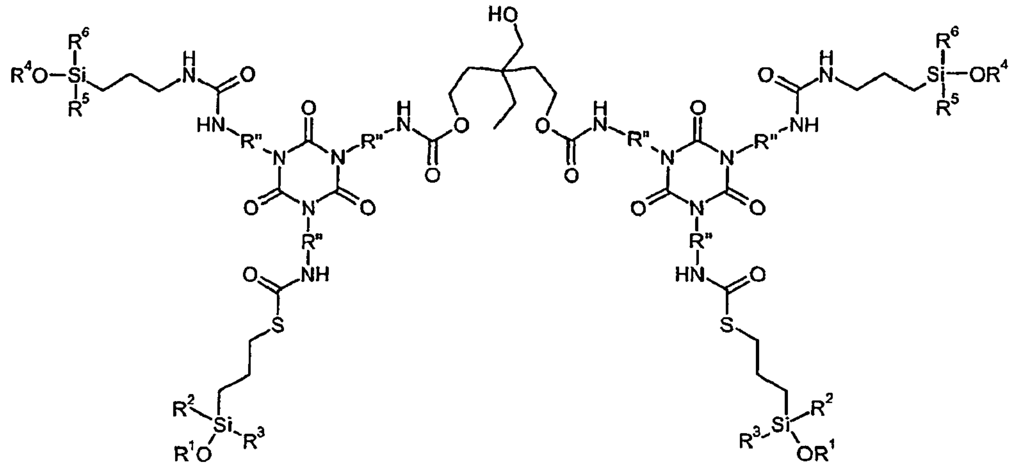

(VI)

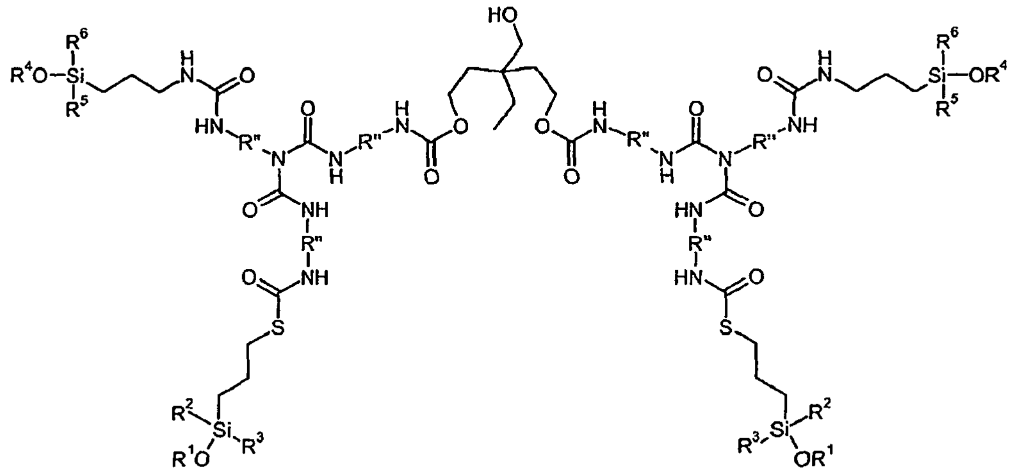

(VII)

wobei R" für einen divalenten Rest, insbesondere einen aliphatischen Alkylenrest, bevorzugt den Hexamethylen-Rest, steht;
$R^4$ für $R^1$, Methyl oder Ethyl steht;
$R^5$ für $R^2$, H, ein $C_1$-bis $C_4$-Alkyl oder $OR^4$ steht;
$R^6$ für $R^3$, H, ein $C_1$-bis $C_4$-Alkyl oder $OR^4$ steht.

**17.** Primerzusammensetzung gemäss einem der vorhergehenden Ansprüche, **dadurch gekennzeichnet, dass** neben der Verbindung **A1** weiterhin ein Haftvermittler, insbesondere eine siliziumorganische Verbindung, bevorzugt eine Trialkoxysilan vorhanden ist.

**18.** Primerzusammensetzung gemäss Anspruch 17, **dadurch gekennzeichnet, dass** der Haftvermittler ein Trialkoxysilan mit primären Aminogruppen, insbesondere ein Trimethoxysilan mit primären Aminogruppen oder ein Trialkoxysilan mit Vinylgruppen ist.

**19.** Primerzusammensetzung gemäss einem der vorhergehenden Ansprüche, **dadurch gekennzeichnet, dass** neben der Verbindung **A1** weiterhin ein Katalysator, insbesondere ein zinnorganischer Katalysator, vorzugsweise ausgewählt aus der Gruppe umfassend Dibutylzinndilaurat, Dibutylzinndichlorid, Zinn-Thioesterkomplexe, Mono-n-butylzinntrichlorid, Di-n-butylzinnoxid, Di-n-butylzinndiacetat und Dibutylzinncarboxylat, vorhanden ist.

**20.** Primerzusammensetzung gemäss einem der vorhergehenden Ansprüche, **dadurch gekennzeichnet, dass** neben der Verbindung **A1** weiterhin ein Lösungsmittel vorhanden ist, welches bei Raumtemperatur nicht mit Isocyanaten reagiert und vorzugsweise ausgewählt ist aus der Gruppe umfassend Xylol, Toluol, Hexan, Heptan, Octan, Aceton, Methyl-Ethylketon, Methyl-Propylketon, Methyl-isopropyl-Keton, Methyl-Butylketon, Dieethylketon, Diisopropylketon, Methylacetat, Ethylacetat, Propylacetat, Butylacetat, Methoxyethylacetat, Methoxypropylacetat und 2-(2-Methoxy-ethoxy)ethylacetat.

**21.** Primerzusammensetzung gemäss einem der vorhergehenden Ansprüche, **dadurch gekennzeichnet, dass** mindestens ein Füllstoff vorhanden, insbesondere Russ, vorhanden ist.

**22.** Verbindung der Formel

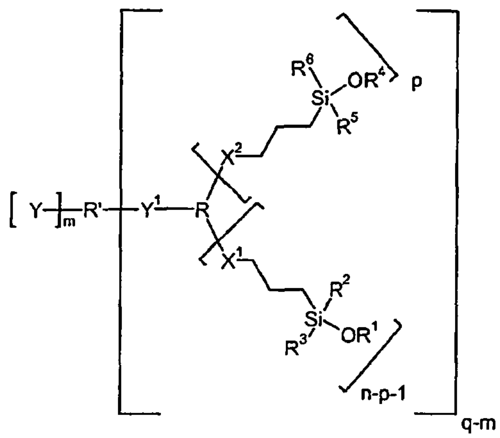

wobei

$R^1$ für Methyl oder Ethyl steht;
$R^2$ für H, ein $C_1$-bis $C_4$-Alkyl oder $OR^1$ steht;
$R^3$ für H, ein $C_1$-bis $C_4$-Alkyl oder $OR^1$ steht;
$R^4$ für $R^1$, Methyl oder Ethyl steht;
$R^5$ für $R^2$, H, ein $C_1$-bis $C_4$-Alkyl oder $OR^4$ steht;
$R^6$ für $R^3$, H, ein $C_1$-bis $C_4$-Alkyl oder $OR^4$ steht;
R für ein Polyisocyanat **A** nach Entfernen aller Isocyanatgruppen steht;
R' für einen Vernetzer **C** nach Entfernen aller Isocyanat-reaktive Gruppen steht;
$X^1$ für eine funktionelle Gruppe steht, die aus der Reaktion zwischen einer Isocyanat reaktiven Gruppe und Isocyanat entsteht, insbesondere für eine Harnstoff-, Urethan- oder Thiocarbamat-Gruppe;
$X^2$ für eine funktionelle Gruppe steht, die aus der Reaktion zwischen einer Isocyanat reaktiven Gruppe und Isocyanat entsteht, insbesondere für eine Harnstoff-, Urethan- oder Thiocarbamat-Gruppe;
$Y^1$ für eine funktionelle Gruppe steht, die aus der Reaktion zwischen einer Isocyanat reaktiven Gruppe und Isocyanat entsteht, insbesondere für eine Harnstoff-, Urethan- oder Thiocarbamat-Gruppe;
Y für eine Isocyanat-reaktive Gruppe steht, insbesondere für $NH_2$, SH oder OH;
n für die Werte 3, 4, 5 oder 6 steht, insbesondere 3 oder 4;
q für die Werte 3, 4, 5 oder 6 steht, insbesondere 3 oder 4;
p für die Werte zwischen 0 und n-1 steht;
m für die Werte 1, 2, 3 oder 4 steht, insbesondere 1 oder 2, so ausgewählt, dass $q - m \geq 2$ ist.

**23.** Verbindung gemäss Anspruch 22, **dadurch gekennzeichnet, dass** die Verbindung die Formel (VI) oder (VII) aufweist

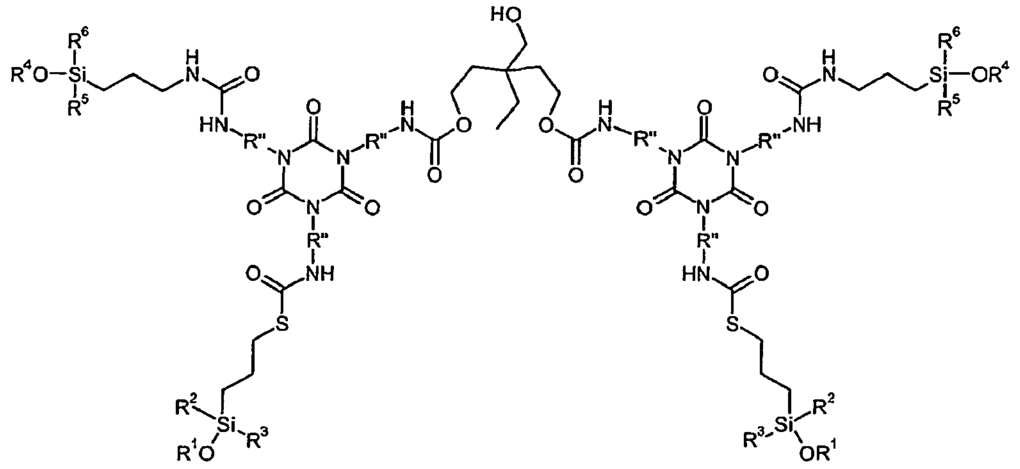

(VI)

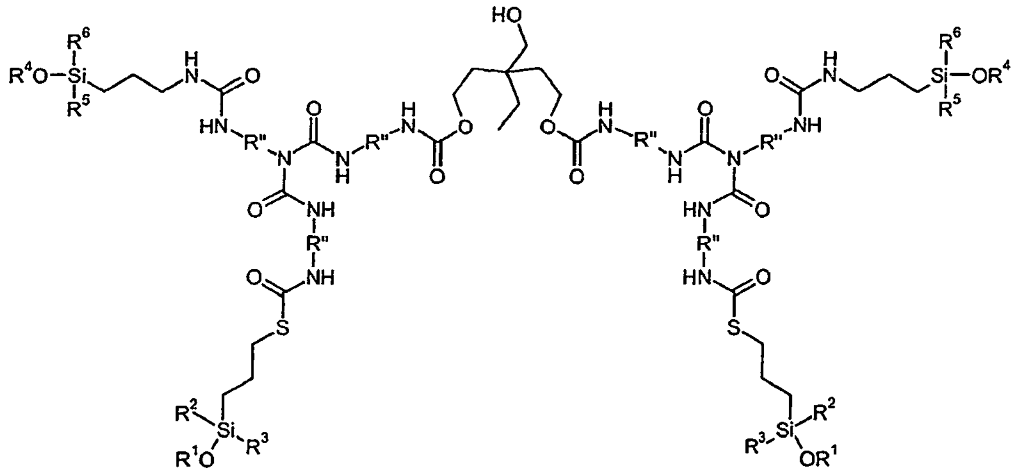

(VII)

wobei R" für einen divalenten Rest, insbesondere einen aliphatischen Alkylenrest, bevorzugt den Hexamethylen-Rest, steht;
$R^4$ für $R^1$, Methyl oder Ethyl steht;
$R^5$ für $R^2$, H, ein $C_1$-bis $C_4$-Alkyl oder $OR^4$ steht;
$R^6$ für $R^3$, H, ein $C_1$-bis $C_4$-Alkyl oder $OR^4$ steht.

**24.** Verwendung der Primerzusammensetzung gemäss einem der Ansprüche 1 bis 21 als Primer für Klebstoffe, Dichtmassen oder Bodenbeläge, insbesondere 1-komponentige feuchtigkeitshärtenende Polyurethanklebstoffe oder -dichtmassen auf Basis von Polyurethanen oder Polyurethan-Silan-Hybriden.

**25.** Verfahren **dadurch gekennzeichnet, dass** eine Primerzusammensetzung gemäss einem der Ansprüche 1 bis 21 mittels Pinsel, Filz, Tuch oder Schwamm auf ein Substrat manuell oder automatisch oder mittels Roboter aufgetragen wird.

**26.** Verfahren gemäss Anspruch 25, **dadurch gekennzeichnet, dass** das Substrat Glas oder Glaskeramik ist.

## Claims

**1.** Primer composition comprising a compound **A1** comprising isocyanate-reactive groups for the preparation of which the following are used

- a polyisocyanate **A** which has at least three isocyanate groups;
- at least one silane **B** of the formula

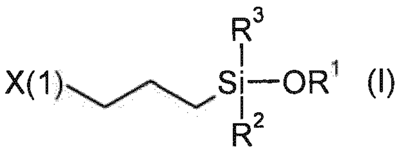

whereby $R^1$ represents methyl or ethyl,
$R^2$ a $C_1$-to $C_4$-alkyl or $OR^1$,
$R^3$ H, a $C_1$-to $C_4$-alkyl or $OR^1$,
X(1) a primary amino group or at least an organic residue carrying primary amino groups and;

- a cross-linking agent C having at least three isocyanate-reactive functional groups.

2. Primer composition according to claim 1, **characterized in that** at least another silane **B** of the formula (I') is used for producing compound **A1** comprising isocyanate-reactive groups

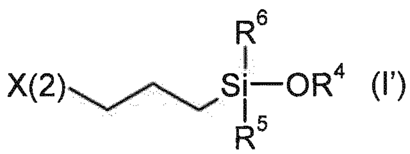

whereby $R^4$ represents methyl or ethyl,
$R^5$ a H, a $C_1$-to $C_4$-alkyl or $OR^4$,
$R^6$ a H, a $C_1$-to $C_4$-alkyl or $OR^4$,
X(2) a primary amino or mercapto or hydroxylic group or an organic residue which carries at least a primary amino or mercapto or hydroxylic group.

3. Primer composition according to claim 2, **characterized in that** $R^6 = OR^4$ in silane **B**, particularly $R^6=R^5=OR^4$.

4. Primer composition according to claim 2 or claim 3, **characterized in that** $R^4$ = methyl in silane **B**.

5. Primer composition according to any of the claims 2 to 4, **characterized in that** X(2) = SH, $NH_2$ or OH, particularly SH, in silane **B**.

6. Primer composition according to any of the preceding claims, **characterized in that** the primer composition is essentially free from isocyanate groups.

7. Primer composition according to any of the preceding claims, **characterized in that** the polyisocyanate **A** is a biuret or an isocyanurate of one or more diisocyanates or an adduct of polyisocyanate and polyol.

8. Primer composition according to any of the preceding claims, **characterized in that** the polyisocyanate **A** is an isocyanurate of an aliphatic diisocyanate, preferably an isocyanurate of hexamethylendiisocyanate.

9. Primer composition according to any of the preceding claims, **characterized in that** $R^3=OR^1$, particularly $R^3=R^2=OR^1$, in silane **B**.

10. Primer composition according to any of the preceding claims, **characterized in that** $R^1$ = methyl in silane **B**.

11. Primer composition according to any of the preceding claims, **characterized in that** they have at least three isocyanate-reactive functional groups of the cross-linking agent **C**, all are identical or different from one another, preferably all are identical and are selected from SH, OH, NH or $NH_2$.

12. Primer composition according to any of the preceding claims, **characterized in that** the cross-linking agent **C** is a polyol, particularly a triol.

**13.** Primer composition according to claim 12, **characterized in that** the cross-linking agent **C** has a OH-equivalent weight of 30 - 350 g/eq, particularly 30 - 170 g/eq, preferably 30 - 65 g/eq.

**14.** Primer composition according to any of the preceding claims, **characterized in that** the cross-linking agent **C** has a molecular weight of 90 - 100 g/mol, particularly 90 - 500 g/mol, preferably 120 - 150 g/mol.

**15.** Primer composition according to any of the preceding claims, **characterized in that** the compound **A1** is the reaction product of a cross-linking agent C and an intermediate product **AB** which is carrying isocyanate groups and which is previously formed from a polyisocyanate **A** and at least a silane **B** of the formula (I) in a stoichiometric excess of isocyanate groups of the polyisocyanate **A** with respect to the isocyanate-reactive groups of silane **B**.

**16.** Primer composition according to any of preceding claims, **characterized in that** the compound **A1** has the formula (VI) or (VII)

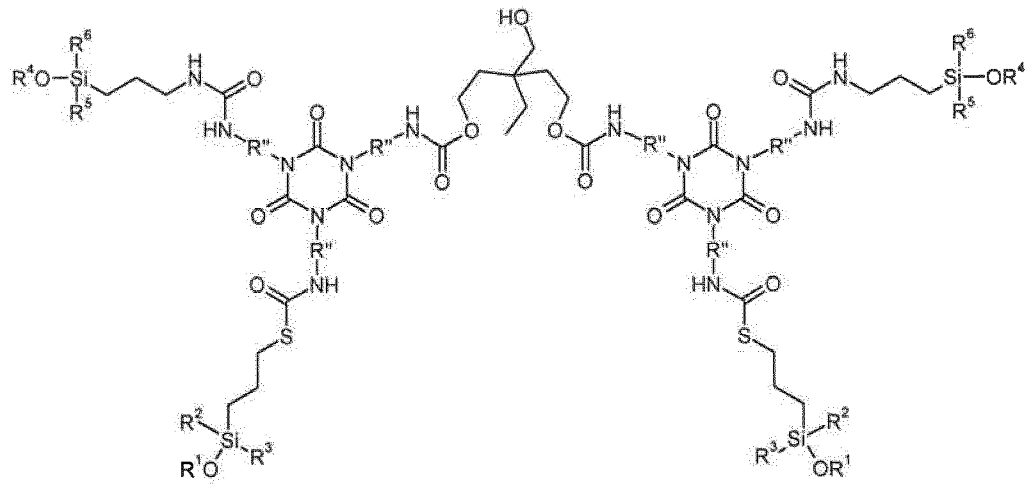

(VI)

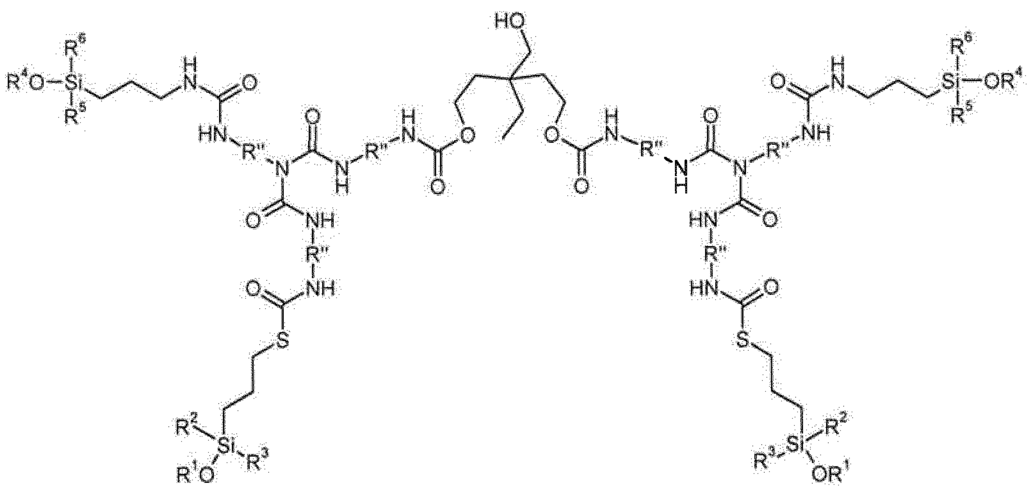

(VII)

whereby R'' represents a divalent residue, particularly an aliphatic alkylene residue, preferably hexamethylene residue;
$R^4$ represents $R^1$, methyl or ethyl;
$R^5$ represents $R^2$, H, $C_1$-to $C_4$-alkyl or $OR^4$;
$R^6$ represents $R^3$, H, $C_1$-to $C_4$-alkyl or $OR^4$.

**17.** Primer composition according to any of the preceding claims, **characterized in that** in addition to the compound **A1** a coupling agent, particularly a silicon-organic compound, preferably a trialkoxy silane, is also present.

**18.** Primer composition according to claim 17, **characterized in that** the coupling agent is a trialkoxy silane carrying

primary amino groups, particularly a trimethoxy silane having primary amino groups or a trialkoxy silane having vinyl groups.

**19.** Primer composition according to any of the preceding claims, **characterized in that** in addition to the compound **A1** a catalyst, particularly a tin-organic catalyst, preferably selected from the group consisting of dibutyl tin dilaurate, dibutyl tin dichloride, tin-thioester complexes, mono-n-butyl tin trichloride, di-n-butyl tin oxide, di-n-butyl tin diacetate and dibutyl tin carboxylate is also present.

**20.** Primer composition according to any of the preceding claims, **characterized in that** in addition to the compound **A1** a solvent which does not react with isocyanates at room temperature and which is preferably selected from the group consisting of xylene, toluene, hexane, heptane, octane, acetone, methylethyl ketone, methylpropyl ketone, methylisopropyl ketone, methylbutyl ketone, diethyl ketone, diisopropyl ketone, methyl acetate, ethyl acetate, propyl acetate, butyl acetate, methoxy-ethyl acetate, methoxy-propyl acetate and 2-(2-methoxy-ethoxy) ethyl acetate.

**21.** Primer composition according to any of the preceding claims, **characterized in that** at least a filler, particularly carbon black is present.

**22.** Compound of formula

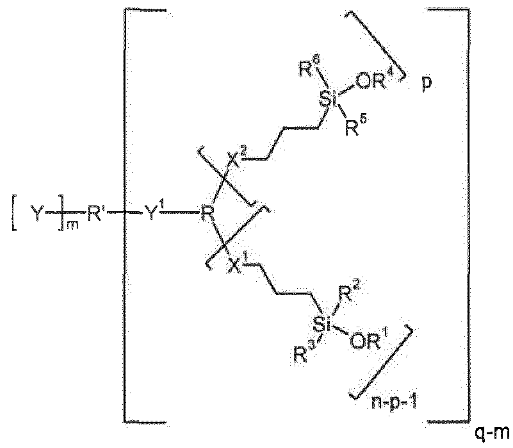

whereby

$R^1$ represents methyl or ethyl;
$R^2$ represents a H, a $C_1$-to $C_4$-alkyl or $OR^1$;
$R^3$ represents a H, a $C_1$-to $C_4$-alkyl or $OR^1$;
$R^4$ represents a $R^1$, methyl or ethyl;
$R^5$ represents a $R^2$, a H, a $C_1$-to $C_4$-alkyl or $OR^4$;
$R^6$ represents a $R^3$, a H, a $C_1$-to $C_4$-alkyl or $OR^4$;
R represents a polyisocyanate **A** after removing all the isocyanate groups;
R' represents a cross-linking agent **C** after removing all the isocyanate-reactive groups;
$X^1$ represents a functional group which is produced from the reaction of an isocyanate-reactive group and an isocyanate, particularly an urea, urethane or thiocarbamate group;
$X^2$ represents a functional group which is produced from a reaction of an isocyanate-reactive group and an isocyanate, particularly an urea, urethane or thiocarbamate group;
$Y^1$ represents a functional group which is produced from the reaction of an isocyanate-reactive group and isocyanate, particularly an urea, urethane or thiocarbamate group;
Y represents an isocyanate-reactive group, particularly $NH_2$, SH or OH;
n represents the values 3, 4, 5 or 6, particularly 3 or 4;
q represents the values 3, 4, 5 or 6, particularly 3 or 4;
p represents the values between 0 and n-1;
m represents the values 1, 2, 3 or 4, particularly 1 or 2, selected in such a way that $q - m \geq 2$.

**23.** Compound according to claim 22, **characterized in that** the compound has the formula (VI) or (VII)

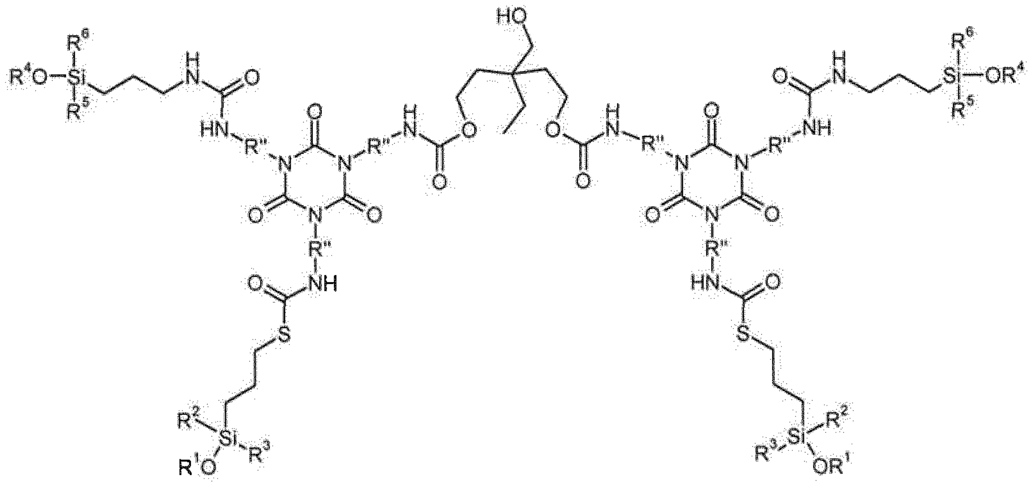

(VI)

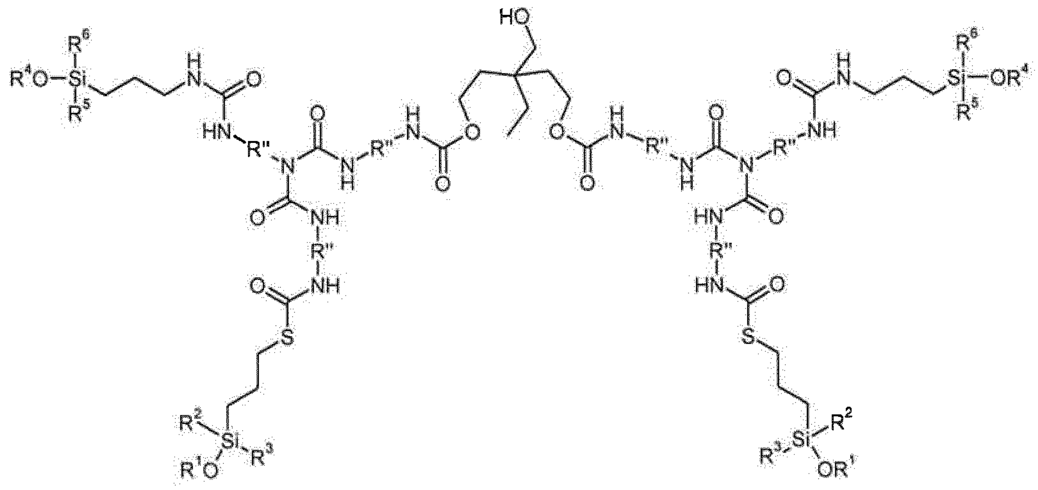

(VII)

whereby R" represents a divalent residue, particularly an aliphatic alkylene residue, preferably hexamethylene residue;
$R^4$ represents a $R^1$, methyl or ethyl;
$R^5$ represents a $R^2$, a H, a $C_1$-to $C_4$-alkyl or $OR^4$;
$R^6$ represents a $R^3$, a H, a $C_1$-to $C_4$-alkyl or $OR^4$.

**24.** Method of using the primer composition according to any of the claims 1 to 21 as a primer for adhesives, sealants or floorings, particularly for 1-component moisture-curing polyurethane adhesives or sealants based on polyurethanes or polyurethane-silane-hybrides.

**25.** Method **characterized in that** a primer composition according to any of the claims 1 to 21 is applied by means of brush, felt, cloth or sponge on a substrate manually or automatically or by means of robots.

**26.** Method according to claim 25, **characterized in that** the substrate is glass or glass ceramics.

**Revendications**

**1.** Composition d'apprêt comportant une liaison de groupe A1 réactive à l'isocyanate pour la fabrication de laquelle sont utilisés

- un polyisocyanate A, présentant au moins trois groupes d'isocyanates ;
- au moins un silane B de formule (I)

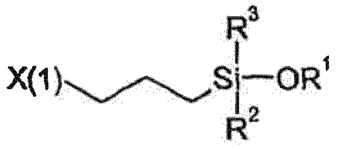 (I)

où $R^1$ = méthyle ou éthyle,
$R^2$ = H, un $C_1$-bis $C_4$-Alkyl ou $OR^1$,
$R^3$ = H, un $C_1$-bis $C_4$-Alkyle ou $OR^1$,
X(1) représente un groupe amine primaire ou un résidu organique portant au moins un groupe amine primaire et ;

- un réticuleur C avec au minimum trois groupes fonctionnels réactifs à l'isocyanate.

**2.** Composition d'apprêt selon revendication 1, **caractérisée par le fait que** pour la fabrication de la liaison de groupe A1 réactive à l'isocyanate, au moins un autre silane de la formule (I') est utilisé

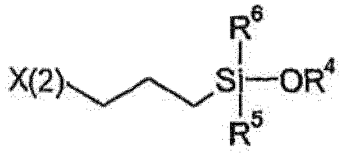 (I')

où $R^4$ = méthyle ou éthyle,
$R^5$ = H, un C1-bis $C_4$-Alkyle ou $OR^4$,
$R^6$ = H, un C1-bis $C_4$-Alkyle ou $OR^4$,
X(2) représente un groupe primaire amine, mercapto ou hydroxyle ou un résidu organique portant au moins un groupe primaire amine, mercapto ou hydroxyle.

**3.** Composition d'apprêt selon revendication 2, **caractérisée par le fait que** dans silane B, $R^6$=$OR^4$, en particulier $R^6$=$R^5$=$OR^4$

**4.** Composition d'apprêt selon revendication 2 ou 3, **caractérisée par le fait que** dans silane B, $R^4$= méthyle.

**5.** Composition d'apprêt selon l'une des revendications 2 à 4, **caractérisée par le fait que** dans silane B, X(2) = SH, $NH_2$ ou OH, en particulier SH

**6.** Composition d'apprêt selon l'une des revendications précédentes, **caractérisée par le fait que** la composition d'apprêt est essentiellement dépourvue de groupes isocyanates.

**7.** Composition d'apprêt selon l'une des revendications précédentes, **caractérisée par le fait que** le polyisocyanate A est un biuret ou un isocyanurate d'un ou plusieurs diisocyanates ou un polyisocyanate-polyol additif.

**8.** Composition d'apprêt selon l'une des revendications précédentes, **caractérisée par le fait que** le polyisocyanate A est un isocyanurate d'un diisocyanate aliphatique, de préférence un isocyanurate de diisocyanate d'hexaméthylène.

**9.** Composition d'apprêt selon l'une des revendications précédentes, **caractérisée par le fait que** dans silane B, $R^3$=$OR^1$, en particulier $R^3$=$R^2$=$OR^1$.

**10.** Composition d'apprêt selon l'une des revendications précédentes, **caractérisée par le fait que** dans silane B, $R^1$ = méthyle.

**11.** Composition d'apprêt selon l'une des revendications précédentes, **caractérisée par le fait que** le minimum de trois groupes fonctionnels réactifs à l'isocyanate du réticuleur C soient tous identiques ou présentent une différence indépendante entre eux, mais de préférence tous identiques, et choisis parmi SH, OH, NH ou $NH_2$.

**12.** Composition d'apprêt selon l'une des revendications précédentes, **caractérisée par le fait que** le réticuleur C est un polyol, en particulier un triol.

**13.** Composition d'apprêt selon revendication 12, **caractérisée par le fait que** le réticuleur C présente un poids d'équivalence OH de 30 - 350 g/eq., en particulier 30 - 170 g/eq, mais de préférence 30 -65 g/eq.

**14.** Composition d'apprêt selon l'une des revendications précédentes, **caractérisées par le fait que** le réticuleur C présente un poids moléculaire de 90 - 1000 g/mol, en particulier 90 - 500 g/mol, mais de préférence 120 -150 g/mol.

**15.** Composition d'apprêt selon l'une des revendications précédentes, **caractérisée par le fait que** la liaison A1 est un produit de la réaction d'un réticuleur C et d'un produit intermédiaire AB porteur de groupes isocyanates et préalablement obtenu à partir d'un polyisocyanate A et au moins d'un silane B de formule (I) avec un excédent stoechiométrique de groupes isocyanates du polyisocyanate A en référence aux groupes réactifs à l'isocyanate du silane B.

**16.** Composition d'apprêt selon l'une des revendications précédentes, **caractérisée par le fait que** la liaison A1 présente la formule (VI) ou (VII)

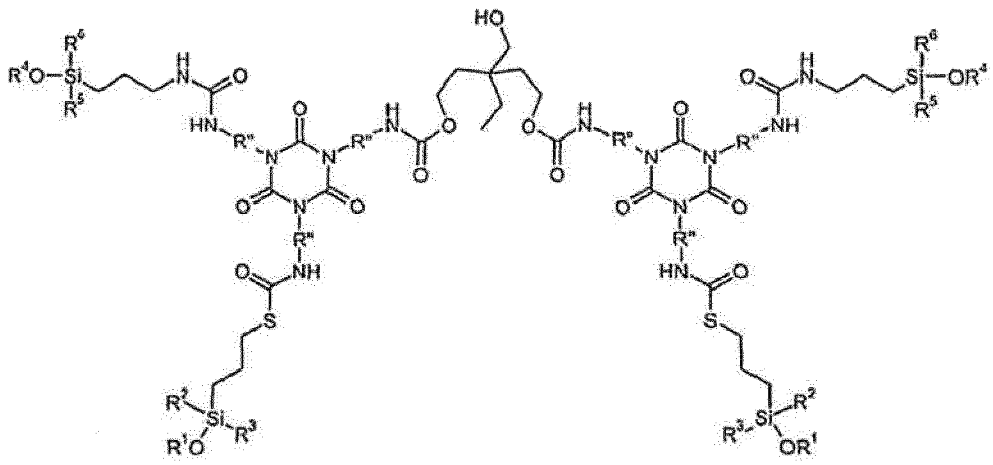

(VI)

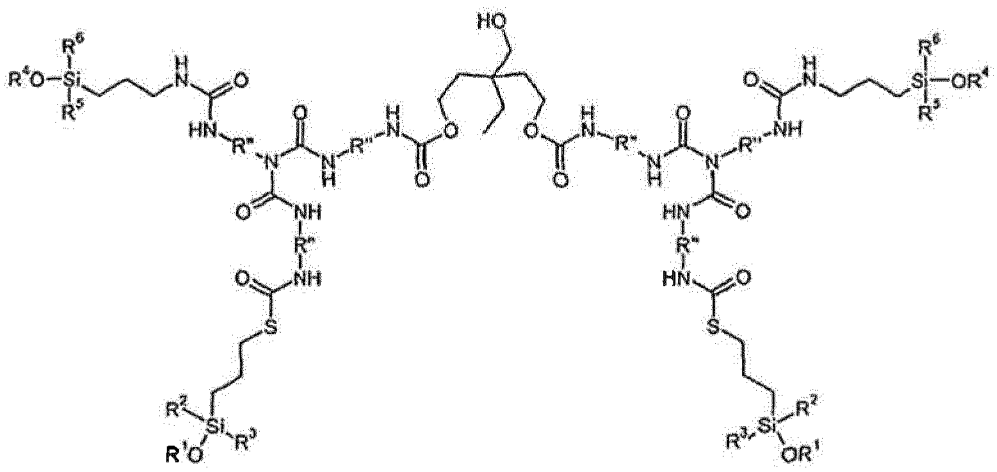

(VII)

où R'' représente un résidu divalent, en particulier un résidu alkyle aliphatique, de préférence le résidu d'hexaméthylène ;
$R^4 = R^1$, méthyle ou éthyle ;
$R^5 = R^2$, H, un $C_1$-bis $C_4$-Alkyle ou $OR^4$ ;

**17.** Composition d'apprêt selon l'une des revendications précédentes, **caractérisée par le fait qu'**en plus de la liaison

A1, un autre agent adhésif, en particulier une liaison organosilicée, de préférence un trialcoxysilane, soit présent.

**18.** Composition d'apprêt selon revendication 17, **caractérisée par le fait que** l'agent adhésif est un trialcoxysilane avec groupes amines primaires, en particulier un triméthoxysilane avec groupes amines primaires ou un trialcoxysilane avec groupes vinyles.

**19.** Composition d'apprêt selon l'une des revendications précédentes, **caractérisée par le fait qu'**en plus de la liaison A1, un autre catalyseur, en particulier un catalyseur organozincique choisi dans le groupe comprenant le dilauratedibutyle de zinc, le dichloride-dibutyle de zinc, les complexes thioesters de zinc, le mono-n-trichloride-butyle de zinc, le di-n-butyle-oxyde de zinc, le di-n-diacétate-butyle de zinc et le carboxylate-dibutyle de zinc.

**20.** Composition d'apprêt selon l'une des revendications précédentes, **caractérisées par le fait qu'**en plus de la liaison A1, un autre solvant ne réagissant pas avec les isocyanates à la température ambiante soit présent et qu'il soit, de préférence, choisi dans le groupe comprenant le xylol, le toluol, l'hexane, l'heptane, l'octane, l'acétone, le méthyléthylcétone, le méthylisopropylcétone, le méthylbutylcétone, le diéthylcétone, le diisopropylcétone, l'acétate de méthyle, l'acétate d'éthyle, l'acétate de propyle, l'acétate de butyle, l'acétate de méthoxyéthyle, l'acétate de méthoxypropyle et le 2-(2-methoxy-ethoxy)acétate d'éthyle.

**21.** Composition d'apprêt selon l'une des revendications précédentes **caractérisée par le fait qu'**au moins une masse de remplissage soit

**22.** Liaison de la formule

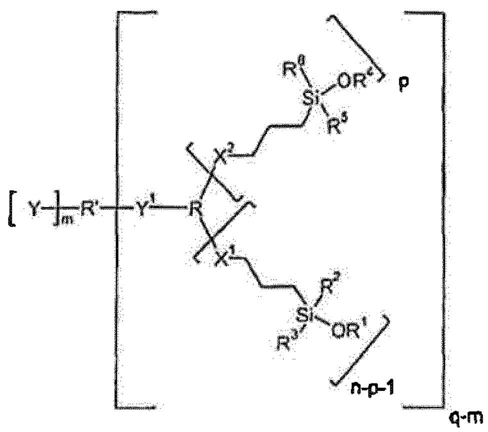

où:

où $R^1$ = méthyle ou éthyle ;
$R^2$ = H, un $C_1$-bis $C_4$-Alkyle ou $OR^1$;
$R^3$ = H, un d-bis $C_4$-Alkyle ou $OR^1$;
$R^4$ = $R^1$, méthyle ou éthyle ;
$R^5$ = $R^2$, H, un $C_1$-bis $C_4$-Alkyle ou $OR^4$;
$R^6$ = $R^3$, H, un $C_1$-bis $C_4$-Alkyle ou $OR^4$.
R = un polyisocyanate A après élimination de tous les groupes isocyanates ;
R' = un réticuleur C après élimination de tous les groupes réactifs à l'isocyanate ;
$X^1$ = un groupe fonctionnel résultant d'une réaction entre un groupe réactif à l'isocyanate et l'isocyanate, en particulier pour un groupe carbamide, uréthane ou thiocarbamate ;
$X^2$ = un groupe fonctionnel résultant d'une réaction entre un groupe réactif à l'isocyanate et l'isocyanate, en particulier pour un groupe carbamide, uréthane ou thiocarbamate ;
q = valeurs 3, 4, 5 ou 6, en particulier 3 ou 4 ;
p = valeurs entre 0 et n-1 ;
m = valeurs 1, 2, 3 ou 4, en particulier 1 ou 2, choisies de telle sorte que q - m >= 2.

**23.** Liaison selon revendication 22, **caractérisée par le fait que** la liaison

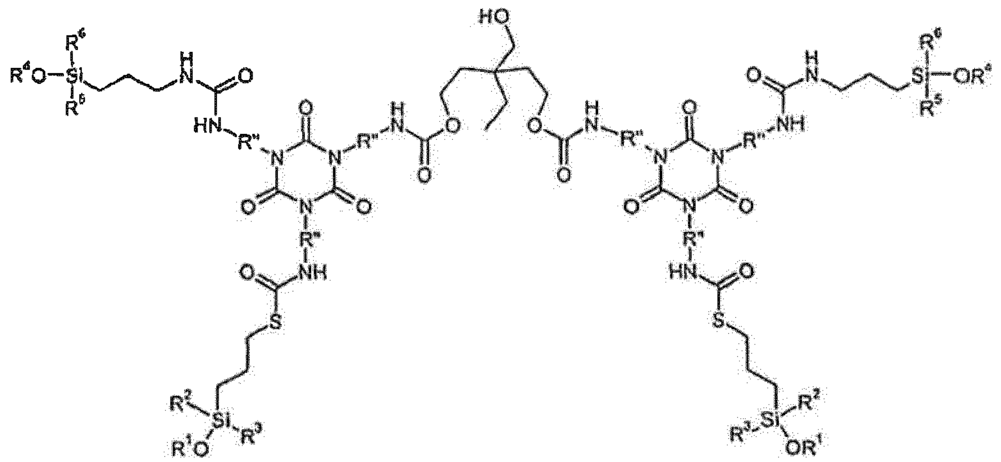

(VI)

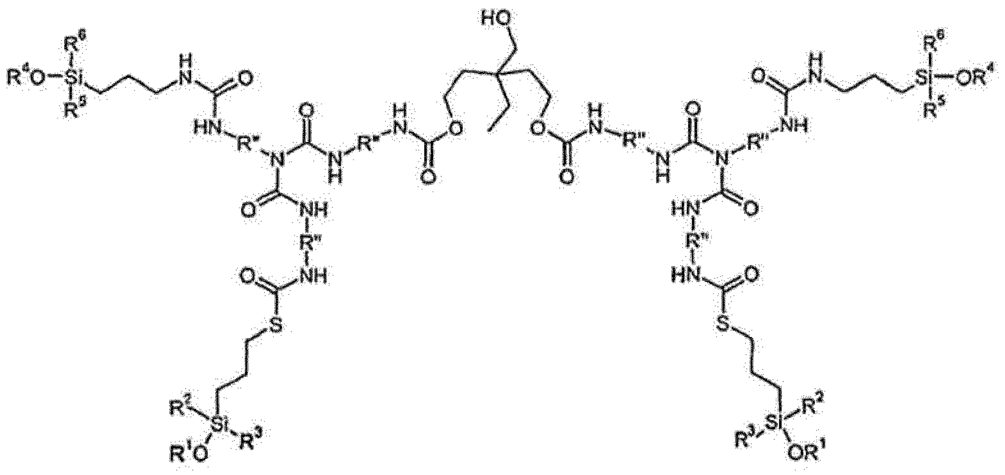

(VII)

où R" représente un résidu divalent, en particulier un résidu alkyle aliphatique, de préférence le résidu d'hexaméthylène ;
$R^4 = R^1$, méthyle ou éthyle ;
$R^5 = R^2$, H, un $C_1$-bis $C_4$-Alkyle ou $OR^4$ ;

**24.** Utilisation de la composition d'apprêt selon l'une des revendications 1 à 21 en tant qu'apprêt pour colles, masses d'étanchéité ou revêtements de sols, en particulier pour colles ou masses d'étanchéité au polyuréthane durcissant en milieu humide, monocomposant, sur base de polyuréthane ou d'hybrides polyuréthane-silane.

**25.** Procédure **caractérisée par le fait qu'** une composition d'apprêt selon l'une des revendications 1 à 21 soit appliquée par pinceau, feutre, tissu ou éponge sur un substrat, soit manuellement, soit automatiquement, soit au moyen d'un robot.

**26.** Procédure selon revendication 25, **caractérisée par le fait que** le substrat est du verre ou de la vitrocéramique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4963614 A
- US 5109057 A
- WO 02059224 A1